# EUROPEAN PATENT APPLICATION

(11) **EP 4 661 309 A1**
(43) Date of publication of application: **10.12.2025**
(21) Application number: 24750582.9
(22) Date of filing: 01.02.2024
(51) Int. Cl.: H04B 7/06, H04W 72/04, H04W 72/21, H04W 72/231, H04W 72/232, H04W 8/24, H04W 52/14, H04W 52/24, H04B 17/29

(54) **METHOD AND DEVICE FOR SUPPORTING BEAMFORMING IN WIRELESS COMMUNICATION SYSTEM**

(30) Priority: 02.02.2023 KR 20230014519; 11.04.2023 KR 20230047777
(71) Applicant: Samsung Electronics Co., Ltd., Suwon-si, Gyeonggi-do 16677 (KR)
(72) Inventor: PARK, Kyoungmin, Suwon-si Gyeonggi-do 16677 (KR); ABEBE, Ameha Tsegaye, Suwon-si Gyeonggi-do 16677 (KR); LIM, Seongmok, Suwon-si Gyeonggi-do 16677 (KR); JANG, Youngrok, Suwon-si Gyeonggi-do 16677 (KR); JI, Hyoungju, Suwon-si Gyeonggi-do 16677 (KR)
(74) Representative: Nederlandsch Octrooibureau
(86) International application number: PCT/KR2024/001518
(87) International publication number: WO 2024/162785

(57) **Abstract**

The present disclosure relates to a 5G or 6G communication system for supporting high transmission rates. According to an embodiment disclosure herein, a base station in a wireless communication system: determines first beam indexes for a terminal; transmits information about the first beam indexes to the terminal; allocates wireless resources to a portion of the first beam indexes; transmits, to the terminal, information about the portion of beam indexes and information about the wireless resources allocated to the portion of beam indexes; and transmits, to the terminal, a first reference signal with which the terminal is to perform a measurement operation in consideration of the portion of beam indexes and the allocated wireless resources, wherein the first beam indexes may indicate the spatial correlation between beams corresponding to the first beam indexes.

## Description

### [Technical Field]

Embodiments of the disclosure relate to a method and device for supporting beamforming in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

An embodiment of the disclosure may provide a method and device for supporting beamforming in a wireless communication system.

An embodiment of the disclosure may provide a method and device for setting beam indices corresponding to respective beams of a base station based on correlations between the beams of the base station.

An embodiment of the disclosure may provide a method and device that enables a base station to transmit reference signals through some of all beams, thereby reducing the number of reference signals transmitted compared to transmitting reference signals through all beams and reducing overhead for reference signal transmission.

An embodiment of the disclosure may provide a method and device that enables a UE, rather than a base station, to select candidate beams to be used for communication.

The objectives of embodiments of the disclosure are not limited to the foregoing, and other technical problems not mentioned may be apparent to those skilled in the art to which the embodiments of the disclosure belong from the description below.

### [Technical Solution]

A method for a base station to support beamforming in a wireless communication system, according to an embodiment of the disclosure, may comprise determining first beam indices for a UE, transmitting information about the first beam indices to the UE, allocating radio resources to some beam indices among the first beam indices, and transmitting information about the some beam indices and information about the radio resources allocated to the some beam indices to the UE, and transmitting a first reference signal for the UE to perform a measurement operation considering the some beam indices and the allocated radio resources. The first beam indices may represent spatial correlation between beams corresponding to the first beam indices.

A base station in a wireless communication system according to an embodiment of the disclosure may comprise a transceiver, and at least one processor operably connected to the transceiver and including a processing circuit. The at least one processor may determine first beam indices for a UE, control the transceiver to transmit information about the first beam indices to the UE, allocate radio resources to some beam indices among the first beam indices, and control the transceiver to transmit information about the some beam indices and information about the radio resources allocated to the some beam indices to the UE, and control the transceiver to transmit a first reference signal for the UE to perform a measurement operation considering the some beam indices and the allocated radio resources. The first beam indices may represent spatial correlation between beams corresponding to the first beam indices.

A method for a UE to support beamforming in a wireless communication system, according to an embodiment of the disclosure, may comprise receiving information about first beam indices allocated for the UE from a base station, receiving information about some beam indices among the first beam indices and information about radio resources allocated to the some beam indices from the base station, and receiving a first reference signal from the base station for the UE to perform a measurement operation considering the some beam indices and the allocated radio resources. The first beam indices may represent spatial correlation between beams corresponding to the first beam indices.

A UE in a wireless communication system, according to an embodiment of the disclosure, may comprise a transceiver, and at least one processor operably connected to the transceiver and including a processing circuit. The at least one processor may receive, through the transceiver, information about first beam indices allocated for the UE from a base station, receive, through the transceiver, information about some beam indices among the first beam indices and information about the radio resources allocated to the some beam indices from the base station, receive a first reference signal from the base station for the UE to perform a measurement operation considering the some beam indices and the allocated radio resources, and measure reception performance corresponding to the some beam indices by the first reference signal. The first beam indices may represent spatial correlation between beams corresponding to the first beam indices.

### [Advantageous Effects]

According to an embodiment of the disclosure, in a wireless communication system, a base station and a UE may support beamforming.

According to an embodiment of the disclosure, correlations between beams of a base station may be identified based on beam indices.

According to an embodiment of the disclosure, by transmitting reference signals through some of all beams, a base station may reduce the number of reference signals transmitted compared to transmitting reference signals through all beams and may reduce overhead for reference signal transmission.

According to an embodiment of the disclosure, a UE, rather than a base station, may directly select candidate beams to be used for communication.

According to an embodiment of the disclosure, it is possible to achieve more flexible beam control compared to the prior art and to prevent performance degradation due to beam collision caused by inappropriate beam selection by a UE.

The effects that may be obtained from the embodiments of the disclosure are not limited to the effects mentioned above, and other effects not mentioned may be clearly understood by those skilled in the art to which the embodiments of the disclosure belong from the description below.

### [Brief Description of Drawings]

FIG. 1 is a view illustrating an example of beams formed by a base station in a wireless communication system according to an embodiment;
FIG. 2 is a view illustrating a multiple beam management procedure in a wireless communication system according to an embodiment;
FIG. 3 is a view illustrating detailed operations of a multiple beam management procedure in a wireless communication system according to an embodiment;
FIG. 4 is a view exemplarily illustrating beam management in a wireless communication system according to an embodiment;
FIG. 5 is a signal flowchart illustrating a UE-oriented beam control technique in a wireless communication system according to an embodiment;
FIG. 6 is a configuration diagram illustrating beams included in a beam set configured for a UE in a wireless communication system according to an embodiment;
FIG. 7 is a view illustrating an example of measuring DL reception performance for a multiple beam management procedure in a wireless communication system according to an embodiment;
FIG. 8 is a flowchart illustrating an operation of a base station transmitting reference signals for beamforming in a wireless communication system according to an embodiment;
FIG. 9 is a flowchart illustrating an operation of a UE receiving reference signals in a wireless communication system according to an embodiment;
FIG. 10 is a flowchart illustrating operations of a base station after transmitting reference signals in a wireless communication system according to an embodiment;
FIG. 11 is a flowchart illustrating operations of a UE after receiving reference signals in a wireless communication system according to an embodiment;
FIG. 12 is a flowchart illustrating an operation of a base station transmitting beam reporting configuration information based on resource index information in a wireless communication system according to an embodiment;
FIG. 13 is a flowchart illustrating an operation of a UE receiving beam reporting configuration information based on resource index information in a wireless communication system according to an embodiment;
FIG. 14 is a flowchart illustrating another operation of a base station transmitting beam reporting configuration information based on resource index information in a wireless communication system according to an embodiment;
FIG. 15 is a flowchart illustrating another operation of a UE receiving beam reporting configuration information based on resource index information in a wireless communication system according to an embodiment;
FIG. 16 is a flowchart illustrating an operation of a base station selecting optimal beams based on spatial correlation information in a wireless communication system according to an embodiment;
FIG. 17 is a flowchart illustrating an operation of a UE receiving information about optimal beams selected based on spatial correlation information from a base station in a wireless communication system according to an embodiment;
FIG. 18 is a flowchart illustrating an operation of a base station selecting optimal beams based on measurement values received based on reporting mode information in a wireless communication system according to an embodiment;
FIG. 19 is a flowchart illustrating an operation of a UE reporting measurement values to a base station based on reporting mode information in a wireless communication system according to an embodiment;
FIG. 20 is a block diagram illustrating a base station according to an embodiment; and
FIG. 21 is a block diagram illustrating a UE according to an embodiment.

### [Mode for the Invention]

Hereinafter, the operational principle of embodiments of the disclosure is described below with reference to the accompanying drawings. When determined to make the subject matter of the disclosure unclear, the detailed description of known functions or configurations may be skipped in describing embodiments of the disclosure. The terms described below are defined considering the functions in embodiments of the present disclosure and may be replaced with other terms according to the intention or practice of the user or operator. Therefore, the terms should be defined based on the overall disclosure.

When determined to make the subject matter of the disclosure unclear, the detailed description of known functions or configurations may be skipped in describing embodiments of the disclosure.

Hereinafter, the disclosure is described in detail with reference to the accompanying drawings.

As used herein, terms for identifying access nodes, terms denoting network entities, terms denoting messages, terms denoting inter-network entity interfaces, and terms denoting various pieces of identification information are provided as an example for ease of description. Thus, embodiments of the disclosure are not limited by the terms, and such terms may be replaced with other terms denoting objects with equivalent technical concept.

The 5G mobile communication network may include a terminal (e.g., a user equipment (UE) or a wireless terminal), a base station (e.g., a radio access network (RAN), a 5g nodeB (gNB), or an evolved nodeB (eNB)), and a 5G core network. The 5G core network may include network functions, such as the access and mobility management function (AMF) that provides a mobility management function of the UE, the session management function (SMF) that provides a session management function, the user plane function (UPF) that performs a data transfer role, a policy control function (PCF) that provides a policy control function, a unified data management (UDM) that provides data management functions, such as for subscriber data and policy control data, and unified data repository (UDR) that stores such various network functions.

In a wireless communication system, to support wireless communication in millimeter wave (mmWave) or frequency range 2 (FR2) regions where propagation loss or path loss is severe, it may be necessary to secure additional processing gain through beamforming at both the base station and UE ends and to offset path loss.

According to an embodiment, a beam management procedure for supporting beamforming is provided in a wireless communication system. The beam management procedure may be a process of updating or managing beamforming in the base station and the UE such that an optimal transmission/reception link (e.g., downlink (DL) or uplink (UL)) is formed or maintained between the base station and the UE. The beam management procedure is required because the location of the UE may be changed or the channel state may be changed. The beam management procedure may include a procedure for beam determination, beam measurement, beam reporting, or beam sweeping. An example of a beam management procedure is a "multiple beam management procedure." A multiple beam management procedure may be a method for supporting beams with high directionality in a wireless communication system.

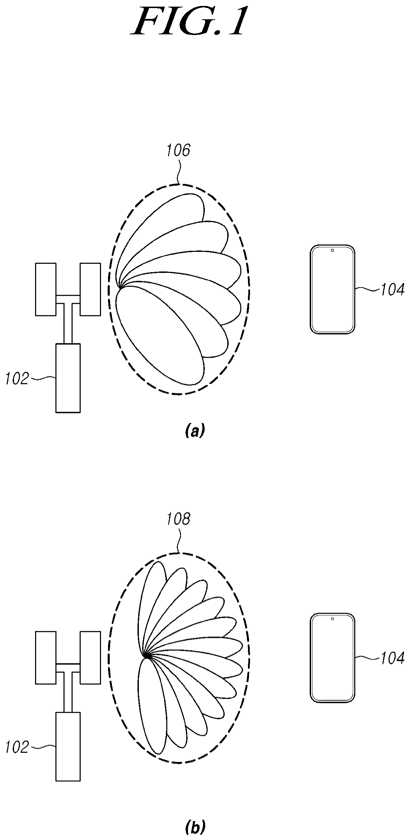

FIG. 1 is a view illustrating an example of beams formed by a base station in a wireless communication system according to an embodiment.

Referring to FIG. 1, beams based on beamforming in a wireless communication system may have directionality. This is called "beam direction." As an example, beam direction may be defined by the direction in which the corresponding beam points or the beam width. In a wireless communication system, beams may be formed to point in different directions. In a wireless communication system, beam width may determine the gain of the corresponding beam. When using a wide beam, the number of beams to cover a service area may be decreased, but the gain may be decreased (see (a)). A wide beam may be referred to as a "beam with low directionality." When using a narrow beam or sharp beam, the number of beams to cover a service area may be increased, but the gain may be increased (see (b)). A narrow beam may be referred to as a "beam with high directionality."

According to the foregoing description, a beam with high directionality (e.g., a narrow beam) may obtain relatively higher gain compared to a beam with low directionality (e.g., a wide beam). Therefore, the base station 102 may form beams with low directionality for a UE (e.g., UE 104 illustrated in (a) of FIG. 1) that may use normal services even with relatively low gain, and may form beams with high directionality for a UE (e.g., UE 104 illustrated in (a) of FIG. 1) that requires relatively high gain.

Beams in a wireless communication system may include beams formed by the base station 102 (hereinafter referred to as "downlink beams") or beams formed by the UE 104 (hereinafter referred to as "uplink beams"). A downlink beam may include a downlink transmission beam formed by the base station 102 to transmit a DL signal or a downlink reception beam formed by the base station 102 to receive an uplink (UL) signal. The downlink transmission beam may be the same as or different from the downlink reception beam. An uplink beam may include an uplink reception beam formed by the UE 104 to receive a DL signal or an uplink transmission beam formed by the UE 104 to transmit a UL signal. The uplink transmission beam may be the same as or different from the uplink reception beam. As an example, the base station 102 may allocate radio resources corresponding to each downlink beam. As an example, the base station 102 may allocate radio resources corresponding to each uplink beam.

According to an example, the base station 102 may transmit a DL signal to the UE 104 through one downlink beam or receive a UL signal from the UE 104. In other words, the downlink transmission beam and downlink reception beam formed by the base station 102 to transmit/receive signals with the UE 104 may be the same. For example, the base station 102 may transmit a DL signal to the UE 104 or may receive a UL signal from the UE 104 through a first downlink beam. The first downlink beam may have beam directionality having a channel environment having a similar DL quality or UL quality. In this case, the UL quality may be predicted by the DL quality.

According to an embodiment, the base station 102 may independently operate a downlink transmission beam for transmitting a DL signal to the UE 104 and a downlink reception beam for receiving a UL signal from the UE 104. In other words, the downlink transmission beam and the downlink reception beam formed by the base station 102 to transmit/receive a signal to/from the UE 104 may be different. For example, the base station 102 may transmit a DL signal to the UE 104 through the first downlink beam (e.g., a downlink transmission beam) and may receive a UL signal from the UE 104 through a second downlink beam (e.g., a downlink reception beam). The first downlink beam may have beam directionality different from that of the second downlink beam. When the beam directionality is different, the channel environment may be different. When the channel environment is different, communication performance (e.g., DL reception quality or UL reception quality) may be different.

According to an embodiment, the UE 104 may receive a DL signal from the base station 102 or may transmit a UL signal to the base station 102 through one uplink beam. In other words, the uplink transmission beam and the uplink reception beam formed by the UE 104 to transmit/receive a signal to/from the base station 102 may be the same. For example, the UE 104 may receive a DL signal from the base station 102 or may transmit a UL signal to the base station 102 through the first uplink beam. The first uplink beam may have beam directionality having a channel environment having a similar DL quality or UL quality. In this case, the UL quality may be predicted by the DL quality.

According to an embodiment, the UE 104 may independently operate an uplink reception beam for receiving a DL signal from the base station 102 and an uplink transmission beam for transmitting a UL signal to the base station 102. In other words, the uplink transmission beam and the uplink reception beam formed by the UE 104 to transmit/receive a signal to/from the base station 102 may be different. For example, the UE 104 may receive a DL signal from the base station 102 through a first uplink beam (e.g., an uplink reception beam) and may transmit a UL signal to the base station 102 through a second uplink beam (e.g., an uplink transmission beam). The first uplink beam may have beam directionality different from that of the second uplink beam. When the beam directionality is different, the channel environment may be different. When the channel environment is different, communication performance (e.g., DL reception quality or UL reception quality) may be different.

In transmitting a DL signal from the base station 102 to the UE 104, the wireless communication system may set a pair between an optimal downlink transmission beam for the base station 102 to transmit the DL signal and an optimal uplink reception beam for the UE 104 to receive the DL signal. In transmitting an UL signal from the UE 104 to the base station 102, the wireless communication system may set a pair between an optimal uplink transmission beam for the UE 104 to transmit the UL signal and an optimal downlink reception beam for the base station 102 to receive the UL signal. The beam pair to transmit or receive the DL signal may be the same as or different from the beam pair to transmit or receive the UL signal.

As an example, first beams 106 formed by the base station 102 in (a) of FIG. 1 may be wide beams. As an example, second beams 108 formed by the base station 102 in (b) of FIG. 1 may be narrow beams. The first beams 106 or second beams 108 may be downlink transmission beams. In this case, the first beams 106 may be beams with relatively lower directionality compared to the second beams 108, and the second beams 108 may be beams with relatively higher directionality compared to the first beams 106.

The number of beams to be formed by the base station 102 to support the same service area in a wireless communication system may vary according to whether beams with low directionality or beams with high directionality are used. As an example, assuming covering the same service area, the base station 102 may form six first beams 106 with low directionality as illustrated in (a) of FIG. 1. As an example, assuming covering the same service area, the base station 102 may form twelve second beams 108 with high directionality as illustrated in (b) of FIG. 1.

The number of beams for which the UE 104 should measure link quality in a wireless communication system may vary according to the number of beams formed by the base station 102. Link quality may be, e.g., DL reception quality. Link quality may be, e.g., at least one of reference signal received power (RSRP), reference signal received quality (RSRQ), or signal to interference plus noise ratio (SINR). In the following description, DL reception quality or UL reception quality is used as an example of link quality.

Referring to (a) of FIG. 1, the UE 104 may measure DL reception quality related to six first beams 106 and report quality information to the base station 102 based on the measured DL reception quality. Quality information may include, e.g., information about beam pairs obtained based on the measured DL reception quality. Information about beam pairs may be, e.g., information indicating pairs of one or more optimal downlink transmission beams and one or more optimal uplink reception beams. One or more optimal downlink transmission beams may be downlink beams among first beams 106 where DL reception quality is the best or where DL reception quality satisfies a threshold level. One or more optimal uplink reception beams may be uplink beams among uplink reception beams formed by the UE 104 where DL reception quality is the best or where DL reception quality satisfies a threshold level. Here, the downlink beam may be a beam formed by the base station 102 to transmit a DL signal (e.g., a reference signal), and the uplink beam may be a beam formed by the UE 104 to receive a DL signal (e.g., a reference signal).

As an example, the base station 102 may sequentially select six first beams 106 by beam sweeping and transmit signals (e.g., reference signals) through the sequentially selected beams. To that end, the base station 102 may allocate radio resources corresponding to each of the first beams 106. Radio resources may be, e.g., resource blocks (RBs) in an orthogonal frequency division multiplexing (OFDM) frame according to an OFDM scheme. In an OFDM frame, RBs may be predefined for each type of reference signal (e.g., synchronization signal block (SSB), channel state information-reference signal (CSI-RS), demodulation reference signal (DMRS)).

The UE 104 may sequentially receive signals from first beams 106 and measure the quality of the received signals. To that end, the UE 104 may perform beam sweeping for a plurality of reception beams. The UE 104 may obtain one or more first optimal beam pairs that it prefers considering information about reception quality measured for the first beams 106. The UE 104 may report information about the one or more first optimal beam pairs to the base station 102. Information about the one or more first optimal beam pairs may be identification information indicating downlink transmission beams or uplink reception beams included in the obtained one or more first optimal beam pairs. The identification information may be beam indices allocated to the corresponding beams. Although not illustrated, the UE 104 may perform beam sweeping for uplink reception beams to receive signals transmitted by the base station 102. The UE 104 may obtain one or more uplink reception beams that will constitute the one or more first optimal beam pairs.

Referring to (b) of FIG. 1, the UE 104 may measure DL reception quality related to twelve second beams 108 and report quality information based on the measured DL reception quality to the base station 102. Quality information may include, e.g., information about beam pairs obtained based on the measured DL reception quality. Information about beam pairs may be, e.g., information indicating pairs of one or more optimal downlink transmission beams and one or more optimal uplink reception beams. One or more optimal downlink transmission beams may be downlink beams among the second beams 108 where DL reception quality is the best or where DL reception quality satisfies a threshold level. One or more optimal uplink reception beams may be uplink beams among uplink reception beams formed by the UE 104 where DL reception quality is the best or where DL reception quality satisfies a threshold level. Here, the downlink beam may be a beam formed by the base station 102 to transmit a DL signal (e.g., a reference signal), and the uplink beam may be a beam formed by the UE 104 to receive a DL signal (e.g., a reference signal).

As an example, the base station 102 may sequentially select twelve second beams 108 by beam sweeping and transmit signals (e.g., reference signals) through the sequentially selected beams. To that end, the base station 102 may allocate radio resources corresponding to each of the second beams 108. Radio resources may be, e.g., RBs in an OFDM frame according to an OFDM scheme. In an OFDM frame, RBs may be predefined for each type of reference signal (e.g., SSB, CSI-RS, DMRS).

The UE 104 may sequentially receive signals from the second beams 108 and measure the quality of the received signals. Signal quality may be, e.g., one of RSRP, RSRQ, or SINR. To that end, the UE 104 may perform beam sweeping for a plurality of reception beams. The UE 104 may obtain one or more second optimal beam pairs that it prefers considering information about reception quality measured for the second beams 108. The UE 104 may report information about the one or more second optimal beam pairs to the base station 102. Information about the one or more second optimal beam pairs may be identification information indicating downlink transmission beams or uplink reception beams included in the obtained one or more second optimal beam pairs. The identification information may be beam indices allocated to the corresponding beams. Although not illustrated, the UE 104 may perform beam sweeping for uplink reception beams to receive signals transmitted by the base station 102. The UE 104 may obtain one or more uplink reception beams that will constitute the one or more second optimal beam pairs.

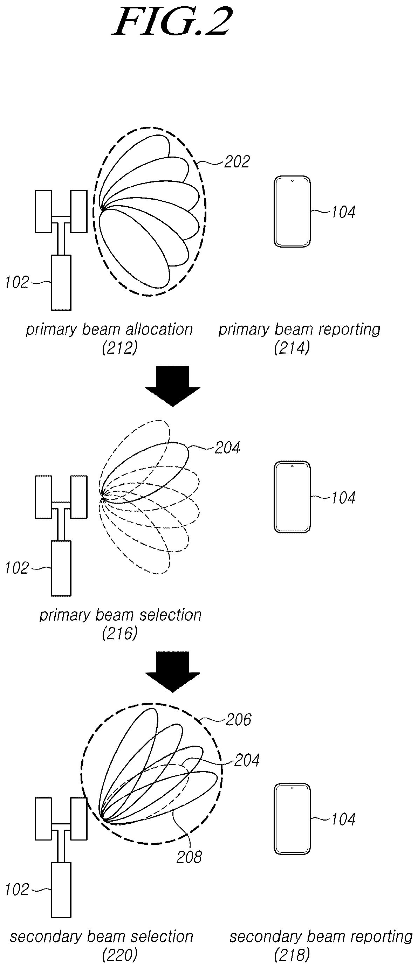

FIG. 2 is a view illustrating a multiple beam management procedure in a wireless communication system according to an embodiment.

Referring to FIG. 2, in a wireless communication system, beam management through a multiple beam management procedure may be operated as a method to secure beam gain through beams with high directionality (e.g., narrow beams) while adjusting the number of beams that base station 102 and the UE 104 should operate to an appropriate level. The multiple beam management procedure may include, e.g., a primary beam management procedure or a secondary beam management procedure. The primary beam management procedure may perform beamforming operations, optimal beam determination operations, or beam selection operations using beams with relatively low directionality (e.g., the first beams 106 in FIG. 1) (hereinafter referred to as "first beams 202"). The secondary beam management procedure may perform beamforming operations, optimal beam determination operations, or beam selection operations using beams with relatively high directionality (e.g., the second beams 108 in FIG. 1) (hereinafter referred to as "second beams 206"). The beamforming operation may be, e.g., an operation in which the base station 102 forms beams with different directionalities. Beams with different directionalities may be, e.g., mapped to radio resources allocated for transmission of signals such as reference signals. The optimal beam determination operation may be, e.g., an operation in which the UE 104 determines one or more optimal beams considering reception quality measured or estimated for beams with different directionalities. The beam selection operation may be, e.g., an operation in which the base station 102 selects beams to be allocated for the UE 104 based on information about one or more optimal beams reported from the UE 104.

The primary beam management procedure or secondary beam management procedure may include beam determination operations, beam measurement operations, beam reporting operations, or beam sweeping operations. For convenience of description below, "beam determination operation," "beam measurement operation," "beam reporting operation," or "beam sweeping operation" included in the primary beam management procedure is referred to as "primary beam determination operation," "primary beam measurement operation," "primary beam reporting operation," or "primary beam sweeping operation." For convenience of description below, "beam determination operation," "beam measurement operation," "beam reporting operation," or "beam sweeping operation" included in the secondary beam management procedure is referred to as "secondary beam determination operation," "secondary beam measurement operation," "secondary beam reporting operation," or "secondary beam sweeping operation."

According to an example, the base station 102 may allocate a set number (e.g., 6) of first beams 202 (e.g., beams with low directionality or wide beams) as beams to be used for the UE 104 in a primary beam allocation operation (operation 212). First beams 202 may have different beam directionalities. The base station 102 may map each of first beams 202 to radio resources. As an example, in a wireless communication system supporting an OFDM scheme, the base station 102 may allocate RBs for transmission of reference signals in an OFDM frame.

The base station 102 may sequentially select the allocated first beams 202 and transmit reference signals through the sequentially selected first beams 202. The base station 102 can, e.g., change the beam direction for transmitting reference signals based on beam sweeping. In other words, the base station 102 may sequentially select first beams 202 using beam sweeping. As an example, the base station 102 may use SSB as a reference signal to be transmitted through first beams 202. The SSB may include reference signals (e.g., physical broadcast channel (PBCH) DMRS) that the UE 104 may consider to measure reception performance. As an example, in a wireless communication system supporting an OFDM scheme, RBs for transmission of SSB may be allocated.

The UE 104 may perform primary beam reporting 214 based on the reception quality of reference signals that base station 102 transmits through each of first beams 202. As an example, the UE 104 may receive reference signals transmitted by the base station 102 through each of first beams 202 and measure DL reception performance (e.g., RSRP, RSRQ, or SINR) related to each of first beams 202 based thereon. The UE 104 may report information about one or more first beams that support the best performance among the measured DL reception performances or where DL reception performance higher than a threshold level was measured to the base station 102. For example, if the DL reception performance measured from one of first beams 202 is the best, the UE 104 may report information about first optimal beam 204 with the best DL reception performance to the base station 102 (operation 214).

When information about first optimal beam 204 is received from the UE 104, the base station 102 may perform a primary beam selection operation (operation 216). In the primary beam selection operation, the base station 102 may select a first beam (e.g., first optimal beam 204) indicated by the information about first optimal beam 204 from among first beams 202.

The base station 102 may perform a secondary beam allocation operation to obtain the second beams 206 (e.g., beams with high directionality or narrow beams) that have similar directionality to the selected first optimal beam 204. The base station 102 may transmit reference signals through the second beams 206 obtained by the secondary beam allocation operation.

According to an example, radio resources for transmitting reference signals may be allocated in a wireless communication system. As an example, in a wireless communication system supporting an OFDM scheme, RBs for transmission of reference signals may be allocated within an OFDM frame. Reference signals (RS) transmitted by the base station 102 using DL resources in an OFDM frame may include DMRS (e.g., physical downlink control channel (PDCCH) DMRS or physical downlink shared channel (PDSCH) DMRS), CSI-RS, or tracking reference signal (TRS). Reference signals transmitted by the base station 102 for beam management may be collectively referred to as "beam management-reference signal (BM-RS)." CSI-RS may be transmitted periodically. PDCCH DMRS or PDSCH DMRS may be transmitted aperiodically. Reference signals transmitted by the UE 104 using UL resources in an OFDM frame may include DMRS (e.g., physical uplink control channel (PUCCH) DMRS) or sounding reference signal (SRS). PUCCH DMRS may be transmitted aperiodically, and SRS may be transmitted periodically.

The UE 104 may perform secondary beam reporting (operation 218) based on the reception quality of reference signals that base station 102 transmits through each of the second beams 206. As an example, the UE 104 may receive reference signals transmitted by the base station 102 through some or all of the second beams 206 and measure DL reception performance (e.g., RSRP, RSRQ, or SINR) related to second beams through which reference signals were received based thereon. The UE 104 may predict or estimate DL reception performance for remaining second beams for which reference signals were not received considering the measured DL reception performance.

The UE 104 may perform secondary beam reporting (operation 218) based on the measured or estimated reception quality. As an example, the UE 104 may report information about one or more second beams that support the best performance among the measured or estimated DL reception performances or where DL reception performance higher than a threshold level was measured or estimated to the base station 102. For example, if the DL reception performance measured or estimated from one or more of the second beams 206 is the best or satisfies a threshold level, the UE 104 may report information about second optimal beams with the best DL reception performance or satisfying the threshold level to the base station 102.

When information about second optimal beams is received from the UE 104, the base station 102 may perform a secondary beam selection operation (operation 220). In the secondary beam selection operation, the base station 102 may select second optimal beam 208 indicated by the information about second optimal beams from among the second beams 206. The base station 102 may perform communication with the UE 104 through the selected second optimal beam 208.

When the multiple beam management procedure illustrated in FIG. 2 is used, the base station 102 may transmit reference signals in a limited manner through some narrow beams (e.g., 4 narrow beams 206 in FIG. 2) rather than through all narrow beams (e.g., 16 narrow beams as illustrated in (b) of FIG. 1). In response thereto, the UE 104 may measure reception quality for some narrow beams and estimate reception quality of adjacent beams for which reference signals were not received using the measured reception quality. Adjacent beams may be, e.g., beams that have high correlation with beams through which reference signals were received. High correlation may mean that even when reference signals are transmitted through adjacent beams, there is a high possibility of experiencing channel environments similar to beams through which reference signals were actually transmitted. As an example, beams with high correlation may be spatially adjacently disposed.

As described above, as the base station 102 transmits reference signals in a limited manner through some of the second beams 206 that have similar directionality to first optimal beam 204 selected by the primary beam selection operation in the secondary beam allocation operation, secondary beam reporting by the UE 104 may be performed more efficiently and quickly.

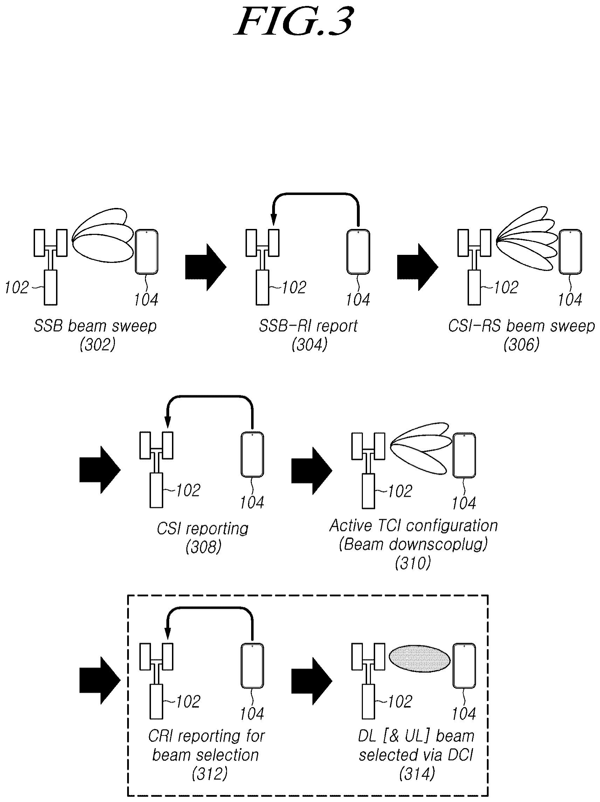

FIG. 3 is a view illustrating detailed operations of a multiple beam management procedure in a wireless communication system according to an embodiment.

Referring to FIG. 3, the base station 102 may perform a first beam sweeping operation 302. The first beam sweeping operation 302 may include an operation of transmitting a first reference signal by sequentially using a set number of wide beams (e.g., the first beams 106 of FIG. 1 or first beams 202 of FIG. 2) of the base station 102. The first reference signal may be an SSB.

The UE 104 may receive the first reference signal transmitted through wide beams sequentially selected by the first beam sweeping operation 302 of the base station 102 and perform measurement reporting 304 related to one or more of the wide beams. For example, the UE 104 may measure DL reception performance (e.g., RSRP) related to each of the wide beams of the base station 102 and report first beam information according to the measured DL reception performance to the base station 102. The first beam information may be information about one or more wide beams that support the best performance among the measured DL reception performances or that satisfy a threshold level. The first beam information may include rank indicator (RI) information corresponding to the one or more wide beams.

The base station 102 may perform a second beam sweeping operation 306 based on the first beam information received from the UE 104. According to an example, the second beam sweeping operation may include an operation of transmitting a second reference signal by sequentially using narrow beams having similar directionality to the one or more wide beams identified by the first beam information of the base station 102. The second reference signal may be, e.g., a CSI-RS.

The UE 104 may sequentially receive the second reference signal transmitted by the second beam sweeping operation 304 of the base station 102 and perform measurement reporting 308 related to one or more of the narrow beams of the base station 102. For example, the UE 104 may measure DL reception performance (e.g., RSRP) related to each of the narrow beams of the base station 102 and report the second beam information about one or more narrow beams that support the best performance among the measured DL reception performances to the base station 102. The second beam information may include CSI-RS resource indicator (CRI) information corresponding to the one or more narrow beams.

The base station 102 may perform a final candidate beam selection operation 310 called "active transmission configuration indication (TCI) state configuration (beam downscoping)" based on the second beam information received from the UE 104. In other words, the base station 102 may select final candidate beams from the narrow beams of the base station 102 based on the second beam information and transmit information about the selected final candidate beams as beam indication information to the UE 104 through DL signaling called TCI state. According to an example, a maximum of 64 candidate beams may be configured for one UE 104, and 8 or fewer candidate beams may be selected as final candidate beams from among the configured 64 candidate beams. The number of selected final candidate beams may be determined based on the PDCCH format that base station 102 mainly intends to use or the number of active TCI states that the UE 104 may support. The base station 104 may transmit beam indication information and transmit a third reference signal through each of the final candidate beams. The third reference signal may be a CSI-RS.

The UE 104 may receive beam indication information from the base station 102 and identify final candidate beams based on the received beam indication information. The UE 104 may perform CRI reporting 312 for beam selection based on the third reference signal transmitted through each of the identified final candidate beams. According to an example, the UE 104 may measure DL reception performance related to each of the final candidate beams based on the third reference signal transmitted through each of the identified final candidate beams. The UE 104 may select at least one of the final candidate beams based on the DL reception performance related to each of the final candidate beams. The UE 104 may report information about the selected at least one candidate beam as third beam information to the base station 102. The third beam information may include CRI information corresponding to the at least one candidate beam.

The base station 102 may select at least one from among the final candidate beams based on the third beam information received from the UE 104 and transmit information about the at least one beam selected by the base station 102 to the UE 104 as a beam to be used for DL and/or UL communication 314. According to an example, the information about the at least one beam selected by the base station 102 may be included in downlink control information (DCI) and transmitted to the UE 104.

The multiple beam management procedure illustrated in FIG. 3 may be performed when performing initial beam configuration or when beam recovery is needed due to beam failure. The operations of the base station 102 and the UE 104 as illustrated in operations 312 and 314 of FIG. 3, e.g., measurement, reporting, or beam selection procedures targeting candidate beams, may be performed repeatedly.

The operations illustrated in FIGS. 2 and 3 may be related to transmission beam selection for DL of the base station 102. Beamforming in DL may include operations where the base station 102 transmits signals using at least one transmission beam and the UE 104 receives signals using at least one reception beam. Among the operations illustrated in FIGS. 2 and 3, when the UE 104 performs operations to report measurement results, such as operations 214 and 220 of FIG. 2 and operations 304, 308, and 312 in FIG. 3, the UE 104 may use beams of UE 104 that correspond to beams of the base station 102 selected in each operation.

In an example, the UE 104 may measure DL reception performance related to each of the beams of UE 104 by performing beam sweeping operations for the beams of UE 104 in response to the beam sweeping operations of the base station 102. The UE 104 may select at least one beam from among the beams of the UE 104 based on the measured DL reception performance. The at least one beam selected by the UE 104 may be used as a reception beam for DL reception and a transmission beam for UL transmission. In other words, the UE 104 may perform beam selection based on DL measurement without performing UL beam sweeping operations and use the selected beam as both a transmission beam and a reception beam. The base station 102 may use the beam finally selected by the operations of FIGS. 2 and 3 as both a transmission beam and a reception beam.

As an example, successful use of a downlink transmission beam may mean that an uplink transmission beam configured based on DL measurement has been successfully used for transmission of UL control information (e.g., CRI reporting). According to an example, based on the existence of beam reciprocity (or beam correspondence) between DL and UL, it may be possible to use the selected downlink transmission beam as an uplink reception beam. Accordingly, a pair of optimal downlink transmission beam and uplink reception beam for DL transmission between the base station 102 and the UE 104 may correspond to a pair of optimal uplink transmission beam and downlink reception beam for UL transmission.

According to an example, there may be exceptional circumstances where the optimal beam pair in DL does not correspond to the optimal beam pair in UL. For example, when the UE 104 uses different antennas for DL and UL communication respectively, or when UE 104 should lower transmission power when transmitting signals in a specific direction based on maximum power reduction (MPR) received from the base station 104, the reception beam (e.g., uplink reception beam) and transmission beam (e.g., uplink transmission beam) of UE 104 may be different. When the reception beam and transmission beam of the UE 104 should be configured differently, the base station 102 and UE 104 may additionally perform a multiple beam management procedure to determine not only the optimal transmission/reception beam pair in DL but also the optimal transmission/reception beam pair in UL.

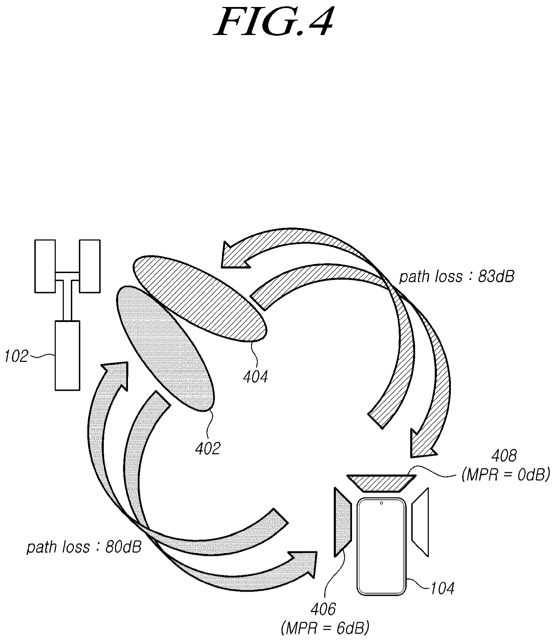

FIG. 4 is a view exemplarily illustrating beam management in a wireless communication system according to an embodiment.

Referring to FIG. 4, the UE 104 may include two or more antenna panels. For example, the UE 104 may include a first panel 406 and a second panel 408. The first panel 406 may support communication through a first beam 402 of the base station 102, and the second panel 408 may support communication through the second beam 404 of the base station 102.

When the path loss of the first beam 402 is 80dB and the path loss of the second beam 404 is 83dB, the base station 102 and the UE 104 may select the first beam 402 having relatively lower path loss for DL communication. For UL communication, the base station 102 and the UE 104 may perform beam selection based on MPR associated with each panel. For example, when the MPR associated with the first panel 406 is 6dB and the MPR associated with the second panel 408 is 0dB, the UE 104 may select the second beam 404 corresponding to the second panel 408 associated with relatively lower MPR for UL communication. The base station 102 may select the second beam 404 for UL communication because the reception power when the first beam 402 is used as a reception beam may be 3dB lower than the reception power when the second beam 404 is used as a reception beam.

The multiple beam management procedure discussed above may enhance beam gain and reduce beam control complexity, but beams other than pre-selected candidate beams may not be used for communication. Therefore, if the base station 102 incorrectly selects candidate beams, or if channel conditions change rapidly so that the configured candidate beams may no longer be used as optimal beams, a beam reconfiguration operation may need to be performed to reconfigure candidate beams. Since the beam reconfiguration operation requires radio resource control (RRC) reconfiguration operations, signaling overhead may be greatly increased when beam reconfiguration operations are performed frequently. Further, since communication is not possible while beam reconfiguration operations are being performed, service quality degradation may occur.

When beam control in the UL direction and beam control in the DL direction should be performed separately, operations according to the multiple beam management procedure should be performed in both the DL direction and UL direction, so complexity and signaling overhead may be greatly increased.

Considering this, a UE-oriented beam control technique where the UE 104, rather than base station 102, directly selects candidate beams to be used for communication may be utilized.

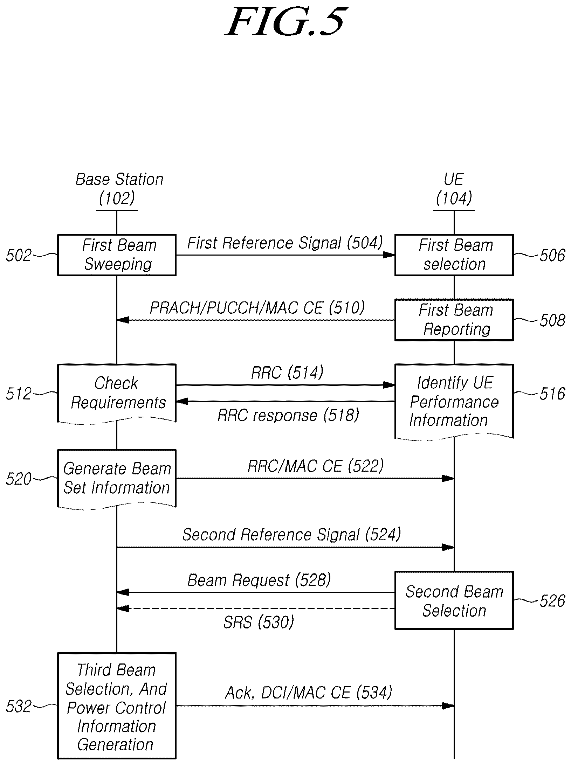

FIG. 5 is a signal flowchart illustrating a UE-oriented beam control technique in a wireless communication system according to an embodiment.

Referring to FIG. 5, in operation 502 or 504, the base station 102 may transmit a first reference signal based on a first beam sweeping operation. For example, the base station 102 may sequentially select first beams (e.g., wide beams 106 of FIG. 1) and transmit a first reference signal through the selected first beams. The base station 102 may allocate radio resources for each of the first beams and transmit a first reference signal through each of the first beams using the radio resources allocated for each of the first beams.

First beams 106 may have beam directionalities pointing in different directions. The first reference signal may be a BM-RS. The BM-RS may be, e.g., a cell-specific reference signal or a UE-specific reference signal. A cell-specific reference signal may be a reference signal that may be commonly used by all the UEs positioned within a service area by the base station 102. Cell-specific reference signals may include, e.g., SSB. A UE-specific reference signal may be a reference signal that may be uniquely used by a UE (e.g., the UE 104) positioned within the service area of the base station 102. UE-specific reference signals may include signals using radio resources uniquely allocated to the UE 104, e.g., BM CSI-RS.

In operation 506, the UE 104 may perform a first beam selection operation to select one or more from among the first beams based on the first reference signal transmitted by the base station 102 through the first beams. As an example, the UE 104 may perform the first beam selection operation based on DL reception performance measured for each of the first beams. The DL reception performance may be based on layer 1 (L1) measurements or layer 3 (L3) measurements such as at least one of RSRP, reference signal received quality (RSRQ), or signal to interference plus noise ratio (SINR).

According to an example, the first beam selection operation may be performed based on configuration or indication from the base station 102. For example, when the base station 102 indicates to perform beam selection based on measurement values related to received signal quality (e.g., L1-RSRP), the UE 104 may perform beam selection based on measurement values related to received signal quality. As another example, when the base station 102 indicates to perform beam selection based on measurement values related to interference (e.g., L1-SINR), the UE 104 may perform beam selection based on measurement values related to interference.

In operation 508, the UE 104 may determine to report information about the one or more first beams selected by the first beam selection operation as first beam information to the base station 102.

In operation 510, the UE 104 may transmit the first beam information by including it in uplink control information (UCI) on a physical random access channel (PRACH) or physical uplink control channel (PUCCH), or by including it in a medium access control (MAC) control element (CE) based on the determination in operation 508. When first beam information is received from the UE 104, the base station 102 may select one or more first beams based on the first beam information. The base station 102 may use the selected one or more first beams as initial beams for communication with the UE 104 until beams to be finally used are selected.

In operation 512, the base station 102 may check requirements to determine whether to use the UE-oriented beam control technique. The requirements may be the UE performance requirements and may include information about cell state or UE performance. For example, the requirements may be related to cellular network circumstances such as cell traffic, traffic of neighboring cells, and inter-cell interference control requests from neighboring cells. According to an example, the requirements may be related to at least one of the information elements shown in Table 1 below.

**[Table 1]**

| |
|---|
| Information element |
| Number of UEs per cell |
| Number of UEs in communication per cell |
| Beam usage information of UEs in communication per cell |
| communication amount (traffic load) per cell |
| interference information per cell |
| Number of UEs of neighboring cell |
| Number of UEs in communication of neighboring cell |

The base station 102 may check requirements configured for each UE and/or each circumstance considering at least one of the information elements shown in Table 1. Requirements configured for each UE may be information in the form of "UE capability" to indicate the performance (capability) of the UE 104. The requirements may include performance information required for the UE 104 to use the UE-oriented beam control technique. For example, the requirements configured for the UE 104 may be performance information of the UE 104 required to perform beam measurement and/or beam estimation, and may be information shown in Table 2 below.

**[Table 2]**

| |
|---|
| Requirements (UE capability) |
| Number of beams UE may measure >= N |
| Maximum number of reference signals allocable to UE for beam measurement >= M |
| Latency time required for beam change of UE <= T |

Referring to Table 2, the requirements may include at least one of information indicating that the number of beams that the UE 104 may measure should be N or more, information indicating that the maximum number of reference signals that UE 104 may be allocated for beam measurement should be M or more, or information indicating that the latency time required for UE 104 to perform beam change (or beam switching) should be T time or less. In Table 2, each of N, M, and T may be integers of 0 or more. According to an example, the requirements may include information requiring that characteristics related to beam estimation accuracy or reliability of the UE 104 should be a threshold or more, in addition to the information listed in Table 2.

According to an example, the base station 102 may transmit a first message including the requirements to the UE 104 in operation 514. The first message transmitted to the UE 104 may be, e.g., an RRC message for enquiring about the performance of the UE 104.

In operation 516, the UE 104 may identify whether UE 104 has performance that meets the requirements based on the first message received from the base station 102.

In operation 518, the UE 104 may transmit a second message including the identification result from operation 516 to the base station 102. The second message transmitted to the base station 102 may be, e.g., an RRC response message.

According to an example, the base station 102 may identify whether the UE 104 has performance that meets the requirements based on the second message and determine to use the UE-oriented beam control technique based on the identification result. When the base station 102 determines to use the UE-oriented beam control technique, the base station 102 may include information indicating that the use of the UE-oriented beam control technique is allowed in a third message and transmit it to the UE 104. According to an example, the third message transmitted to the UE 104 may be an RRC message.

In operation 520, the base station 102 may generate beam set information based on the permission to use the UE-oriented beam control technique. The beam set information may include information about a beam set that may be provided to the UE 104. The beam set may be configured differently for each UE and may be configured based on the one or more first beams (e.g., wide beams) reported by the UE 104 in operation 510. According to an example, the base station 102 may configure a beam set including the second beams (e.g., narrow beams) having similar directionality to the one or more first beams. The second beams may have higher directionality than the one or more first beams.

The base station 102 may configure beam indices for the UE 104 corresponding to each of the second beams included in the beam set. The beam indices corresponding to each of the second beams may be configured by relative numbering. According to an example, relative numbering may mean that base station 102 configures beam indices indicating each of the second beams based on correlations between the second beams.

The correlations between the second beams may represent spatial correlation between the second beams (or relative spatial relations between the second beams). The base station 102 may allocate beam indices with smaller index differences to beams with greater spatial correlation in relation to the second beams. Alternatively, the base station 102 may allocate beam indices with greater index differences to beams with smaller spatial correlation. Based on such a method, the base station 102 may make beams with greater spatial correlation have adjacent beam indices.

According to an example, the beam index information may include beam indices #0 to #6 as shown in Table 3 below.

**[Table 3]**

| Beam index information |
|---|
| #0 |
| #1 |
| #2 |
| #3 |
| #4 |
| #5 |
| #6 |

Referring to Table 3, the beam corresponding to beam index #0 may have the greatest spatial correlation with the beam corresponding to beam index #1 and the smallest spatial correlation with the beam corresponding to beam index #6. Further, the spatial correlation between the beam corresponding to the beam index #0 and each of the beams corresponding to the beam indices #2, #3, #4, #5, #6 may decrease in the order of the beam indices #2, #3, #4, #5, #6. Resultantly, the magnitude of spatial correlation between the beam corresponding to beam index #0 and the beams corresponding to beam indices #1 to #6 may be represented as "beam index #1 > #2 > #3 > #4 > #5 > #6."

The magnitude of spatial correlation between the beam corresponding to beam index #1 and the beams corresponding to beam indices #0 and #2 to #6 may be represented as "beam index #0 = #2 > #3 > #4 > #5 > #6."

The magnitude of spatial correlation between the beam corresponding to beam index #2 and the beams corresponding to beam indices #0, #1, and #3 to #6 may be represented as "beam index #1 = #3 > #0 = #4 > #5 > #6."

The magnitude of spatial correlation between the beam corresponding to beam index #3 and the beams corresponding to beam indices #0 to #2 and #4 to #6 may be represented as "beam index #2 = #4 > #1 = #5 > #0 = #6."

The magnitude of spatial correlation between the beam corresponding to beam index #4 and the beams corresponding to beam indices #0 to #3, #5, and #6 may be represented as "beam index #3 = #5 > #2 = #6 > #1 > #0."

The magnitude of spatial correlation between the beam corresponding to beam index #5 and the beams corresponding to beam indices #0 to #4 and #6 may be represented as "beam index #4 = #6 > #3 > #2 > #1 > #0."

The magnitude of spatial correlation between the beam corresponding to beam index #6 and the beams corresponding to beam indices #0 to #5 may be represented as "beam index #5 > #4 > #3 > #2 > #1 > #0."

According to an example, unlike what is shown in Table 3, the beam index information may include beam count information indicating the number of the second beams. For example, the base station 102 may transmit information indicating "7" as beam count information to the UE 104, thereby enabling the UE 104 to recognize a total of 7 beam indices starting from beam index #0 (e.g., beam indices #0 to #6) based on the beam count information "7."

According to an example, spatial correlation may be related to similarity of channel environment (or channel state). For example, the beam corresponding to beam index #2 may be identified as having high similarity in channel environment with beams corresponding to beam indices #1 or #3, and low similarity in channel environment with the beam corresponding to beam index #6.

In operation 522, the base station 102 may transmit beam set information to the UE 104. According to an example, the beam set information may include information about the second beams. The information about the second beams may include beam index information as information that enables identification of spatial correlation of the second beams. The information about the second beams may include at least one of beam information corresponding to each of the second beams or spatial correlation information of the second beams along with the beam index information. The information about the second beams may be at least one of a plurality of configurations preset for each beam (e.g., narrow beams) of the base station 102. At least one of the plurality of configurations may be indicated to the UE 104 through MAC CE or DCI. Alternatively, the information about the second beams may be characteristics of the base station 102 or a cell and may be included in system information and transmitted to the UE 104.

The beam index information may be information about beam indices indicating each of the second beams or beam count information indicating the number of second beams. The beam indices may be used as beam indicators for indicating the second beams, rather than indicating RS resources used for beam measurement such as RS resource indices or RS resource indicators (e.g., CRI or SSB resource indicator (SSBRI)). The base station 102 may transmit beam set information including beam index information to the UE 104 by including it in one of an RRC message, MAC CE, or DCI. The beam information corresponding to each of the second beams may include at least one of information related to the transmission direction of each of the second beams (e.g., angle of departure (AoD) information) or information about physical characteristics of each of the second beams (e.g., beam width information such as 3dB beam width information and/or beam resolution information). The base station 102 may transmit beam information by including it in beam set information or may transmit beam information by including it in a separate message such as an RRC configuration message to the UE 104.

According to an example, when the base station 102 transmits the beam information by including it in the beam set information, the beam set information may include information shown in Table 4 below.

**[Table 4]**

| Beam index information | Beam information | | |
|---|---|---|---|
| | AoD information | Beam width information | Beam resolution information |
| #0 | First AoD | First beam width | First beam resolution |
| #1 | Second AoD | Second beam width | Second beam resolution |
| #2 | Third AoD | Third beam width | Third beam resolution |
| #3 | Fourth AoD | Fourth beam width | Fourth beam resolution |
| #4 | Fifth AoD | Fifth beam width | Fifth beam resolution |
| #5 | Sixth AoD | Sixth beam width | Sixth beam resolution |
| #6 | Seventh AoD | Seventh beam width | Seventh beam resolution |

Referring to Table 4, the beam set information may include the beam index information and at least one of the AoD information, the beam width information, or the beam resolution information as the beam information corresponding to each of the beam indices. According to an example, when the second beams included in the beam set are 7 beams, the beam index information may include beam indices #0 to #6 corresponding to each of the 7 beams. According to an example, at least one of AoD information, beam width information, or beam resolution information may be configured corresponding to each of beam indices #0 to #6. Since the beam index information may be used to identify spatial correlation between the second beams, the UE 104 may identify spatial correlation between the second beams as shown in Table 5 below based on the beam index information. Alternatively, the base station 104 may transmit spatial correlation information of the second beams as shown in Table 5 below to the UE 104. The base station 102 may transmit spatial correlation information of the second beams by including it in beam set information or may transmit spatial correlation information of the second beams by including it in a separate message such as an RRC configuration message to the UE 104.

Table 5 below is a table exemplifying spatial correlation information of the second beams based on beam index information.

**[Table 5]**

| beam index information | other beam index information | spatial correlation information (correlation value) |
|---|---|---|
| #0 | #1 | 1 |
| | #2 | 2 |
| | #3 | 3 |
| | #4 | 4 |
| | #5 | 5 |
| | #6 | 6 |
| #1 | #0 | 1 |
| | #2 | 1 |
| | #3 | 2 |
| | #4 | 3 |
| | #5 | 4 |
| | #6 | 5 |
| #2 | #0 | 2 |
| | #1 | 1 |
| | #3 | 1 |
| | #4 | 2 |
| | #5 | 3 |
| | #6 | 4 |
| #3 | #0 | 3 |
| | #1 | 2 |
| | #2 | 1 |
| | #4 | 1 |
| | #5 | 2 |
| | #6 | 3 |
| #4 | #0 | 4 |
| | #1 | 3 |
| | #2 | 2 |
| | #3 | 1 |
| | #5 | 1 |
| | #6 | 2 |
| #5 | #0 | 5 |
| | #1 | 4 |
| | #2 | 3 |
| | #3 | 2 |
| | #4 | 1 |
| | #6 | 1 |
| #6 | #0 | 6 |
| | #1 | 5 |
| | #2 | 4 |
| | #3 | 3 |
| | #4 | 2 |
| | #5 | 1 |

Referring to Table 5, the spatial correlation between a beam corresponding to one beam index and a beam corresponding to another beam index may be indicated by a correlation value based on the beam index difference. A smaller correlation value may mean greater spatial correlation and/or similarity of channel environment between beams. For example, since beam indices #3 and #5 have the smallest correlation value (e.g., 1) for beam index #4, the beam corresponding to beam index #4 may be identified as having the greatest spatial correlation and/or similarity of channel environment with beams corresponding to beam indices #3 and #5. Further, since beam index #0 has the largest correlation value (e.g., 4) for beam index #4, the beam corresponding to beam index #4 may be identified as having the smallest spatial correlation and/or similarity of channel environment with the beam corresponding to beam index #0.

According to an example, a threshold for correlation values may be configured. For example, when the threshold is 2, a beam corresponding to one beam index may be identified as a beam having the smallest spatial correlation and/or similarity of channel environment with beams of other beam indices corresponding to correlation values greater than 2. For example, in relation to beam index #4, beams corresponding to beam indices #0 and #1 having correlation values greater than 2 may be identified as beams having the smallest spatial correlation and/or similarity of channel environment with the beam corresponding to beam index #4.

In operation 524, the base station 102 may transmit a second reference signal to the UE 104. According to an example, the second reference signal may be BM CSI-RS or CSI-RS transmitted through some beams among the second beams included in the beam set. According to an example, the second reference signal may be transmitted corresponding to some beam indices among all beam indices.

According to an example, before transmitting the second reference signal, the base station 102 may allocate radio resources corresponding to some beam indices and transmit information about radio resources allocated to some beam indices to the UE 104. The base station 102 may transmit a second reference signal for the UE 104 to perform measurement operations to the UE 104 considering some beam indices and radio resources allocated to some beam indices.

According to an example, radio resources allocated to some beam indices may represent resources used for transmitting the second reference signal (e.g., BM-RS resource). The base station 102 may transmit information about radio resources allocated to some beam indices as RS resource configuration information to the UE 104 through an RRC configuration message. The RS resource configuration information may include RS resource indicator information (e.g., CRI or SSBRI) indicating radio resources allocated to some beam indices.

According to an example, the base station 102 may allocate multiple radio resources to the UE 104 and transmit information about the allocated multiple radio resources to the UE 104. Thereafter, the base station 102 may indicate to the UE 104 that some radio resources among the multiple radio resources are used for transmitting the second reference signal. For example, the base station 102 may transmit information indicating that some radio resources are activated to the UE 104 through an RRC message or MAC CE.

According to an example, the base station 102 may associate radio resources allocated (or activated) for transmitting the second reference signal with beam indices. The base station 102 may allocate radio resources to some beams among the second beams and associate radio resources allocated to some beams with beam indices corresponding to some beams. Accordingly, the base station 102 may allocate radio resources to some beam indices corresponding to some beams and transmit information about some beam indices and information about radio resources allocated to some beam indices to the UE 104 through, e.g., an RRC message or MAC CE.

According to an example, the base station 102 may transmit information about beams used for transmission of the second reference signal (or beams to which radio resources are allocated) and/or information about beams not used for transmission of the second reference signal (or beams to which radio resources are not allocated) as beam indication information to the UE 104. For example, the beam indication information may include beam index information corresponding to beams used for transmission of the second reference signal and/or beam index information corresponding to beams not used for transmission of the second reference signal. Further, the beam indication information may further include at least one of information related to the transmission direction of beams used for transmission of the second reference signal (e.g., AoD information) or information about physical characteristics of beams used for transmission of the second reference signal (e.g., beam width information and/or beam resolution information).

According to an example, the beam indication information may be included in the beam set information transmitted to the UE 104 in operation 522. Alternatively, the beam indication information may be transmitted as separate information to the UE 104 before the second reference signal is transmitted in operation 524.

According to an example, when the beam indication information is included in the beam set information, the beam set information may include information shown in Table 6 below.

**[Table 6]**

| Beam index information | Beam indication information | AoD information | Beam width information | Beam resolution information |
|---|---|---|---|---|
| #0 | 1 | First AoD | First beam width | First beam resolution |
| #1 | 0 | Second AoD | Second beam width | Second beam resolution |
| #2 | 0 | Third AoD | Third beam width | Third beam resolution |
| #3 | 1 | Fourth AoD | Fourth beam width | Fourth beam resolution |
| #4 | 0 | Fifth AoD | Fifth beam width | Fifth beam resolution |
| #5 | 0 | Sixth AoD | Sixth beam width | Sixth beam resolution |
| #6 | 1 | Seventh AoD | Seventh beam width | Seventh beam resolution |

Referring to Table 6, the beam set information may have a form in which beam indication information is added to the information shown in Table 4. The beam set information may include beam index information and beam indication information and may further include or not include at least one of AoD information, beam width information, or beam resolution information.

According to an example, when the second beams included in the beam set are 7 beams, the beam index information may include beam indices #0 to #6 corresponding to each of the 7 beams. The beam indication information may include information (e.g., 0 or 1) for indicating whether each of beam indices #0 to #6 is used for transmission of the second reference signal. For example, when beam indices #0, #3, and #6 are used for transmission of the second reference signal, the beam indication information corresponding to each of beam indices #0, #3, and #6 may include information (e.g., 1) indicating use for transmission of the second reference signal. When beam indices #1, #2, #4, and #5 are not used for transmission of the second reference signal, the beam indication information corresponding to each of beam indices #1, #2, #4, and #5 may include information (e.g., 0) indicating non-use for transmission of the second reference signal.

Although not shown in Table 6, RS resource indicator information (e.g., CRI or SSBRI) may be included corresponding to each of beam indices #0, #3, and #6. In other words, information about resources used for transmission of the second reference signal may be included corresponding to each of beam indices #0, #3, and #6.

According to an example, unlike what is shown in Table 6, the beam indication information may include reference beam index information and offset information. When the reference beam index is beam index #0 and the offset information is 3, a set number of beam indices (e.g., beam indices #0, #3, and #6) that differ from beam index #0 by multiples of 3, including beam index #0, may be indicated as being used for transmission of the second reference signal. At least one of AoD information, beam width information, or beam resolution information may be transmitted corresponding to each of beam indices #0 to #6 or may be transmitted corresponding to each of beam indices #0, #3, and #6 used for transmission of the second reference signal. At least one of AoD information, beam width information, or beam resolution information may be optional information and may not be transmitted.

According to an example, the base station 102 may configure information about measurement and reporting of the UE 104 related to the second beams. Information about measurement may include information about some beams among the second beams for which the UE 104 will perform measurement operations based on the second reference signal. Information about some beams that the UE 104 should measure may include some beam index information corresponding to some beams and/or resource information allocated to some beams (e.g., RS resource indicator information). The base station 102 may transmit information about measurement to the UE 104 through an RRC message or MAC CE.

According to an example, information about measurement may include information indicating aperiodic measurement to the UE 104. In this case, the base station 102 may transmit information about measurement to the UE 104 through DCI.

According to an example, information about reporting may include information about some beams among the second beams that the UE 104 may report. Information about some beams that the UE 104 may report may be the same as or different from information about some beams that the UE 104 may measure. Information about some beams that the UE 104 may report may include beam index information corresponding to the some beams or measurement configuration index information related to the some beams. The measurement configuration index information may be information for indicating at least one of a plurality of measurement configurations configured for each of the second beams. The base station 102 may transmit information about reporting to the UE 104 through an RRC message or MAC CE.

According to an example, information about reporting may include information indicating aperiodic reporting to the UE 104. In this case, the base station 102 may transmit information about reporting to the UE 104 through DCI.

When the UE 104 needs to report measurement results or estimation results for corresponding beams based on information about measurement and reporting, the UE 104 may report beam index information, rather than RS resource indicators, along with measurement results or estimation results to the base station 102. Information reported to the base station 102 may be included in UCI and transmitted through PUCCH or physical uplink shared channel (PUSCH). According to an example, the base station 102 may perform operations to control UL transmission power. For example, the base station 102 may transmit control information for controlling UL transmission power to the UE 104. The UL transmission power may represent transmission power that the UE 104 will use for UL transmission corresponding to each of the second beams. The control information may include information about a second reference signal that the UE 104 will use for path loss measurement. The control information may include information indicating whether the UE 104 will measure path loss corresponding to each of the second beams based on one second reference signal or based on two or more second reference signals.

According to an example, the UE 104 may measure path loss related to each beam through which the second reference signal was transmitted based on one or more transmitted second reference signals. The measured path loss may be used to estimate path loss related to beams through which the second reference signal was not transmitted.

According to an example, the UE 104 may perform path loss measurement operations as default mode operations after operation 524 without receiving separate component or control information from the base station 102. Path loss measurement operations performed as default mode operations may include operations where the UE 104 measures path loss related to each beam through which the second reference signal was transmitted based on one or more transmitted second reference signals and estimates path loss related to all or some of the second beams included in the beam set and/or beams corresponding to second reference signals that were not transmitted based on the measured path loss.

According to an example, when the second reference signal is transmitted on channels such as PDCCH and/or PDSCH, the UE 104 may measure path loss of the beam through which the second reference signal was transmitted based on the second reference signal. The second reference signal may include, e.g., DMRS of PDCCH and/or DMRS of PDSCH. Path loss of beams through which the second reference signal was not transmitted may be estimated based on path loss measured based on the second reference signal.

According to an example, the UE 104 may measure path loss for each of candidate beams such as the second beams based on a second reference signal (e.g., CSI-RS) and, when a beam to be used for communication among the second beams is later indicated by the base station 102, measure path loss for the indicated beam based on a third reference signal (e.g., DMRS). According to an example, path loss for the indicated beam may be calculated based on path loss measured based on the second reference signal and path loss measured based on the third reference signal.

According to an example, path loss measured through the second reference signal may be L1-RSRP, L1-RSRQ, L3-RSRP, or L3-RSRQ. According to an example, path loss measurement operations of the UE 104 may be performed based on indications from the base station 102 or may be performed without indications from the base station 102.

In operation 524, the UE 104 may receive the second reference signal based on beam indication information received from the base station 102. For example, the UE 104 may identify some beams that are used for transmission of the second reference signal among the second beams included in the beam set based on the beam indication information and receive the second reference signal through the identified some beams.

In operation 526, the UE 104 may perform a second beam selection operation based on the received second reference signal. The second beam selection operation may include an operation in which the UE 104 selects one or more second beams from among the second beams based on DL reception performance for each of the second beams included in the beam set. DL reception performance for each of the second beams may be measured or estimated based on link quality related to each of the second beams.

The UE 104 may measure link quality related to some beams among the second beams based on the second reference signal. For example, link quality may be based on at least one of L1-RSRP, L1-SINR, L3-RSRP, or L3-SINR.

The UE 104 may estimate link quality related to remaining beams among the second beams, i.e., beams through which the second reference signal was not transmitted, except for some beams. For example, the UE 104 may estimate link quality related to the remaining beams considering spatial correlation by beam indication information (e.g., beam index information corresponding to beams used for transmission of the second reference signal and/or beam index information corresponding to beams not used for transmission of the second reference signal) and link quality measured for some beams.

The UE 104 may select one or more second beams from among the second beams in order of high DL reception performance based on link quality of each of the second beams. To request base station 102 to use the selected one or more second beams, the UE 104 may transmit information about the selected one or more second beams to the base station 102 in operation 528.

According to an example, information about the selected one or more second beams may include beam index information and/or link quality information about the one or more second beams. According to an example, information about the selected one or more second beams may be included in a beam request message for requesting beam use and transmitted to the base station 102.

According to an example, measurement and reporting operations of the UE 104 that may be performed in operations 526 and 528 may be performed based on information about measurement and reporting configured by the base station 102.

As an optional operation, the UE 104 may perform SRS transmission through the selected one or more second beams in operation 530. The SRS transmitted through the selected one or more second beams may be used by the base station 102 to measure UL reception performance corresponding to one or more beam indices corresponding to the selected one or more second beams. The base station 102 may measure UL reception performance related to the one or more second beams and use the measured UL reception performance for beam use approval or beam selection.

When the UE 104 performs SRS transmission for beam selection by the base station 102, the UE 104 may use resources pre-allocated for SRS transmission. The UE 104 may perform SRS transmission without permission or indication from the base station 102.

In operation 532, the base station 102 may perform a third beam selection operation. According to an example, the third beam selection operation may include an operation of selecting beams for communication with the UE 102 based on the one or more second beams selected by the UE 104.

According to an example, the third beam selection operation may include an operation in which the base station 102 selects the one or more second beams selected by the UE 104 as beams for communication with UE 102.

According to an example, the third beam selection operation may include an operation in which the base station 102 selects at least one from among the one or more second beams as beams to be used based on UL reception performance or link quality related to each of the one or more second beams identified based on each SRS. For example, when beams selected by the UE 104 are beam 2 and beam 3, the base station 102 may measure UL reception performance based on SRS transmitted through each of beam 2 and beam 3 and select one of beam 2 and beam 3 as a beam to be used based on the measured UL reception performance.

According to an example, the base station 102 may not perform the third beam selection operation. For example, when UL reception performance for each of the one or more beams is below a threshold, the base station 102 may not select the one or more second beams selected by the UE 104 as beams to be used. In this case, the base station 102 may perform the base station-oriented beam control technique illustrated in FIG. 2 or FIG. 3, restart the UE-oriented beam control technique illustrated in FIG. 5, or select at least one beam different from the one or more second beams selected by the UE 104 from among the second beams based on DL or UL reception performance.

In operation 532, the base station 102 may generate power control information. According to an example, the power control information may include information indicating whether to perform path loss measurement based on a previously used reference signal (e.g., CSI-RS) or based on a new reference signal (e.g., DMRS). According to an example, the operation of generating power control information may be performed optionally and may be omitted.

In operation 534, the base station 102 may transmit information about at least one third beam selected by the third beam selection operation to the UE 104. According to an example, information about the at least one third beam may include beam index information corresponding to the at least one third beam.

According to an example, when the base station 102 selects the one or more second beams selected by the UE 104 as beams to be used, the base station 102 may transmit an acknowledgement (Ack) signal to the UE 104.

According to an example, the base station 102 may transmit information about at least one beam selected from among the one or more second beams based on UL reception performance measured using SRS to the UE 104. Information about the selected at least one beam is related to beams to be used for communication between the base station 102 and the UE 104 and may include, e.g., beam index information corresponding to the at least one beam. According to an example, the beam index information may include beam index information for each channel or reference signal or may include beam index information commonly used for multiple channels or reference signals. The base station 102 may transmit information about the selected at least one beam to the UE 104 by including it in DCI or MAC CE. Even when the base station 102 continuously uses the same beam for a specific channel or reference signal, the base station 102 may transmit information about the corresponding beam to the UE 104 by including it in DCI or MAC CE.

According to an example, when the base station 102 has not performed the third beam selection operation, the base station 102 may transmit a negative acknowledgement (Nack) signal to the UE 104. Further, the base station 102 may also transmit information about beams selected by the base station 102 based on DL or UL reception performance to the UE 104.

According to an example, when the base station 102 has generated UL power control information, the base station 102 may transmit the generated UL power control information to the UE 104. The UL power control information may include information for controlling UL transmission power. The base station 102 may configure UL power control information corresponding to each of the second beams when generating beam set information in operation 520. UL power control information corresponding to each of the second beams may be configured for each beam index corresponding to the second beams and may include at least one of reference signal information for path loss measurement (e.g., information about aperiodic reference signals such as DMRS), target reception power information of the base station 102, power offset information, or path loss compensation factor information. The path loss compensation factor may be information for power calculation of PUSCH, and at least one of a plurality of configured values may be provided by the base station 102.

If beams for communication with the UE 102 are determined, the base station 102 may transmit UL power control information corresponding to beam indices of the determined beams to the UE 104. Alternatively, the base station 102 may transmit UL power control information for each beam index corresponding to the second beams to the UE 104 in advance and, after beam determination, indicate UL power control information corresponding to beam indices of the determined beams to the UE 104. According to an example, beam index information may be used to indicate UL power control information, or separate indicators may be used.

When beams previously used by the base station 102 for communication with the UE 104 are changed to other beams, the base station 102 may transmit information for indicating changes in UL power control information (hereinafter referred to as "UL power control configuration change information") to the UE 104. The UL power control configuration change information may include information indicating that reference signals for path loss measurement are changed. For example, the UL power control configuration change information may include information indicating that path loss should be measured based on other reference signals (e.g., aperiodic reference signals such as DMRS) instead of reference signals previously used by the UE 104 for path loss measurement (e.g., periodic reference signals such as CSI-RS). The base station 102 may transmit UL power control configuration change information to the UE 104 by including it in an RRC message or MAC CE.

The UL power control configuration change information may include indication information indicating "change of reference signals for path loss measurement." The base station 102 may transmit UL power control configuration change information including indication information to the UE 104 by including it in DCI. If the UE 104 receives DCI and identifies indication information, the UE 104 may perform path loss measurement based on reference signals (e.g., DMRS on PDSCH or PDCCH) corresponding to the indication information.

When the UE 104 receives UL power control configuration change information, when UE 104 has already performed path loss measurement based on preconfigured reference signals for changed beams, the UE 104 may perform one of the following two operations.

The UE 104 may perform a first operation of deleting a first path loss value obtained based on preconfigured reference signals and obtaining a second path loss value by performing path loss measurement based on newly configured reference signals (e.g., aperiodic reference signals such as DMRS or TRS). Alternatively, the UE 104 may perform a second operation of calculating a new path loss value based on the first path loss value and the second path loss value.

The base station 102 may indicate the UE 104 to perform one of the first and second operations. The indication from the base station 102 may be included in one of an RRC message, MAC CE, or DCI and transmitted to the UE 104. Alternatively, without indication from the base station 102, the UE 104 may perform one of the first and second operations according to preconfigured rules.

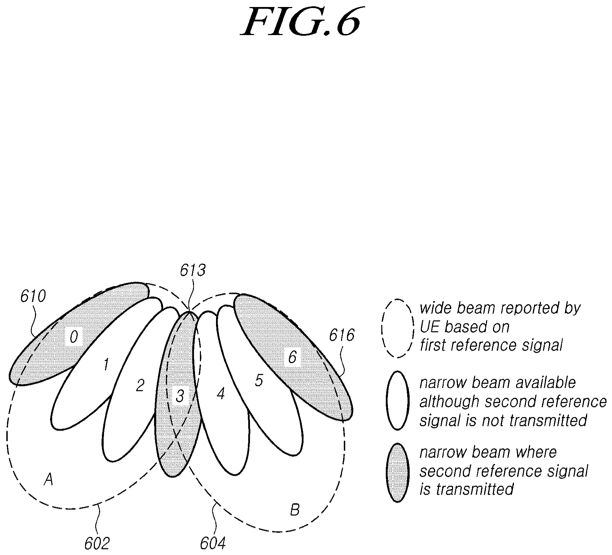

FIG. 6 is a configuration diagram illustrating beams included in a beam set configured for a UE in a wireless communication system according to an embodiment.

Referring to FIG. 6, the beam set configured by the base station 102 for the UE 104 may be configured based on one or more first optimal beams reported by the UE 104 based on a first reference signal transmitted by a first beam sweeping operation of the base station 102. According to an example, when one or more first optimal beams are reported from the UE 104, the base station 102 may configure the second beams having similar directionality to the one or more first optimal beams as beams to be included in the beam set. The second beams may have higher directionality than the one or more first optimal beams. For example, the one or more first optimal beams may be wide beams with low directionality, and the second beams may be narrow beams with high directionality.

In FIG. 6, as an example, 2 wide beams and 7 wide beams are illustrated. The 7 narrow beams may have similar directionality to the 2 wide beams. According to an example, the base station 102 may configure beam indices corresponding to each of the 7 narrow beams. Each beam index may be configured by relative numbering corresponding to radio resources allocated for second reference signals (e.g., CSI-RS or DMRS) to be transmitted periodically or aperiodically. According to an example, relative numbering may mean that the base station 102 configures beam indices corresponding to each of the 7 narrow beams based on spatial correlation between the 7 narrow beams. As defined above, correlations between beams may be proportional to the level expected to experience similar channel environments when transmitting reference signals. For example, for beams expected to experience similar channel environments when transmitting reference signals, the correlation relationship may be determined to be high. In an example, configured beam indices may indicate one beam or mean allocated radio resources corresponding to one beam.

According to an example, the base station 102 may allocate beam indices with smaller index differences to beams with greater spatial correlation and/or similarity of channel environment in relation to the 7 narrow beams, and may allocate beam indices with greater index differences to beams with smaller spatial correlation and/or similarity of channel environment. Beams with greater spatial correlation and/or similarity of channel environment may be beams with high correlation relationships, and beams with smaller spatial correlation and/or similarity of channel environment may be beams with low correlation relationships.

According to an example, the beam 610 corresponding to beam index #0 may have the greatest spatial correlation and/or similarity of channel environment with the beam corresponding to beam index #1, and may have the smallest spatial correlation and/or similarity of channel environment with the beam 616 corresponding to beam index #6. The beam 616 corresponding to beam index #6 may have the greatest spatial correlation and/or similarity of channel environment with the beam corresponding to beam index #5, and may have the smallest spatial correlation and/or similarity of channel environment with the beam 610 corresponding to beam index #0.

According to an example, the base station 102 may transmit a second reference signal using some beams among the 7 narrow beams. For example, the base station 102 may transmit a second reference signal through beams corresponding to beam indices #0, #3, and #6 among narrow beams corresponding to beam indices #0 to #6. Beam indices #0, #3, and #6 may be selected considering spatial correlation between beams.

According to an example, some beams used by the base station 102 for transmitting the second reference signal may be selected considering spatial correlation between the 7 narrow beams, i.e., beam indices. For example, the base station 102 may select some beams having a beam index difference value that is a configured value to select beams having configured spatial correlation. To that end, beam indices may be pre-mapped for each beam considering spatial correlation between beams. FIG. 6 exemplifies selection of beams with a beam index difference value of 3, e.g., beam 610 corresponding to beam index #0, beam 613 corresponding to beam index #3, and beam 616 corresponding to beam index #6.

According to an example, the base station 102 may select some beams based on DL reception performance related to wide beams reported by the UE 104. For example, when beam A 602 and beam B 604 are reported as optimal beams by a primary beam management procedure, the base station 102 may select beams having similar directionality to beam A 602 or beam B 604 (e.g., beams corresponding to beam indices #0, #3, and #6) as narrow beams for performing a secondary beam management procedure.

According to an example, when the DL reception performance (e.g., RSRP) of beam A 602 is reported to be better than the DL reception performance of beam B 604 among beam A 602 and beam B 604 illustrated in FIG. 6, the base station 102 may select beams having similar directionality to beam A 602 (e.g., beams corresponding to beam indices #0, #1, and #2).

According to an example, the base station 102 may select beams having similar directionality to at least one beam (e.g., beam B 604) having DL reception performance above a threshold among beam A 602 and beam B 604 illustrated in FIG. 6 (e.g., beams corresponding to beam indices #4, #5, and #6).

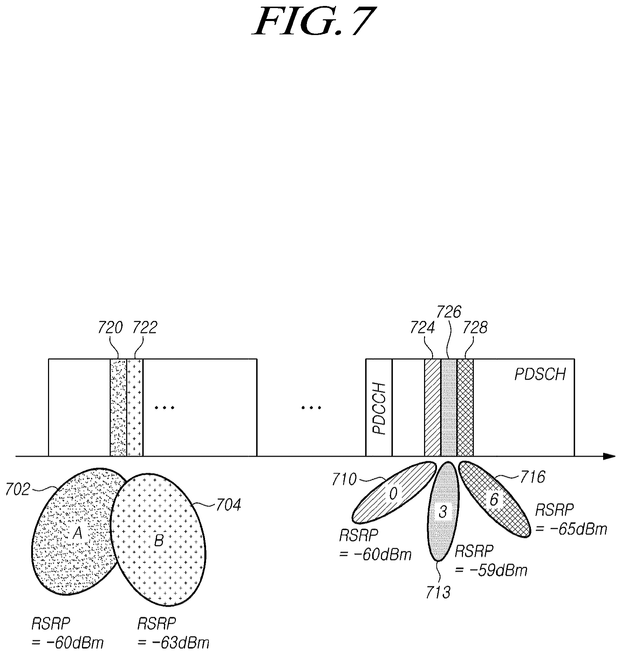

FIG. 7 is a view illustrating an example of measuring DL reception performance for a multiple beam management procedure in a wireless communication system according to an embodiment.

Referring to FIG. 7, the UE 104 may select beam A 702 and beam B 704 as optimal wide beams from among wide beams of the base station 102 in response to a first beam sweeping operation of the base station 102 using a first reference signal. The base station 102 may use radio resources allocated to each beam for transmission of reference signals through beam A 702 and beam B 704. For example, the base station 102 may use a first radio resource 720 for transmission of reference signals through beam A 702 and may use a second radio resource 722 for transmission of reference signals through beam B 704. The first radio resource 720 and second radio resource 722 may be included in predefined radio resources based on the type of reference signal (e.g., SSB).

The UE 104 may perform RSRP measurement to identify DL reception performance related to each of beam A 702 and beam B 704. For example, the RSRP measured by the UE 104 in relation to beam A 702 may be -60dB, and the RSRP measured in relation to beam B 704 may be -63dB. The UE 104 may report RSRP information of each of beam A 702 and beam B 704 along with information about beam A 702 and beam B 704 to the base station 102.

The base station 102 may configure a beam set for the UE 104 based on information reported from the UE 104. For example, the base station 102 may configure 7 narrow beams having similar directionality to beam A 702 and beam B 704 selected as optimal wide beams as a beam set. The 7 narrow beams may each have beam indices configured by relative numbering. According to an example, the 7 narrow beams may be beams having beam indices #0 to #6 with different directionalities and may correspond to 7 narrow beams as illustrated in FIG. 6. Hereinafter, the 7 narrow beams are referred to as beam #0 to beam #6. As an example, among beam #0 to beam #6, beams with adjacent indices may have high correlation relationships, and beams with distant indices may have low correlation relationships.

The base station 102 may transmit information about the beam set to the UE 104 and transmit a second reference signal through some beams among beams included in the beam set, e.g., beam #0 710, beam #3 713, and beam #6 716. Beam #0 710, beam #3 713, and beam #6 716 may correspond to beams that may maintain correlation relationships above a threshold level among beams included in the beam set. Radio resources allocated to beam #0 710, beam #3 713, and beam #6 716 respectively for transmitting the second reference signal may be different from each other in time and/or frequency and may be configured differently for each UE. In the embodiment illustrated in FIG. 7, a third radio resource 724, fourth radio resource 726, and fifth radio resource 728 allocated to beam #0 710, beam #3 713, and beam #6 716 respectively are exemplified. The third radio resource 724, fourth radio resource 726, and fifth radio resource 728 may be different time resources allocated for reference signals (e.g., PDSCH DMRS) on PDSCH.

The UE 104 may receive resource allocation information for beams for transmitting the second reference signal from the base station 102. The resource allocation information may be included in beam set information. The UE 104 may receive reference signals transmitted through beam #0 710, beam #3 713, and beam #6 716 based on the beam set information. The UE 104 may perform RSRP measurement to identify DL reception performance related to each of beam #0 710, beam #3 713, and beam #6 716 based on the received reference signals. As an example, the RSRP measured by the UE 104 in relation to beam #0 710 may be -60dB, the RSRP measured in relation to beam #3 713 may be -59dB, and the RSRP measured in relation to beam #6 716 may be -65dB.

The UE 104 may identify that the DL reception performance for beam #0 710 is the best based on the RSRP related to beam #0 710 and beam #3 713 being relatively large among the RSRP related to each of beam #0 710, beam #3 713, and beam #6 716, and the RSRP related to beam #3 713 being larger than the RSRP related to beam #0 710.

The UE 104 may estimate that the optimal beam is present between beam #0 710 and beam #3 713 or is beam #3 713 based on the RSRP related to beam #0 710 being the same as the RSRP related to beam A 702, the RSRP related to beam #3 713 being larger than the RSRP related to beam A 702, and the directionality difference between beam #0 710 and beam #3 713 being larger than the beam width of beam A 702 (e.g., 3dB beam width).

The UE 104 may estimate that the optimal beam is beam #3 713 or is a beam closer to beam #3 713 among beams present between beam #0 710 and beam #3 713 based on the RSRP related to beam #3 713 being larger than the RSRP related to beam #0 710. For example, the UE 104 may estimate that beam #2 or beam #3 713 is the optimal beam.

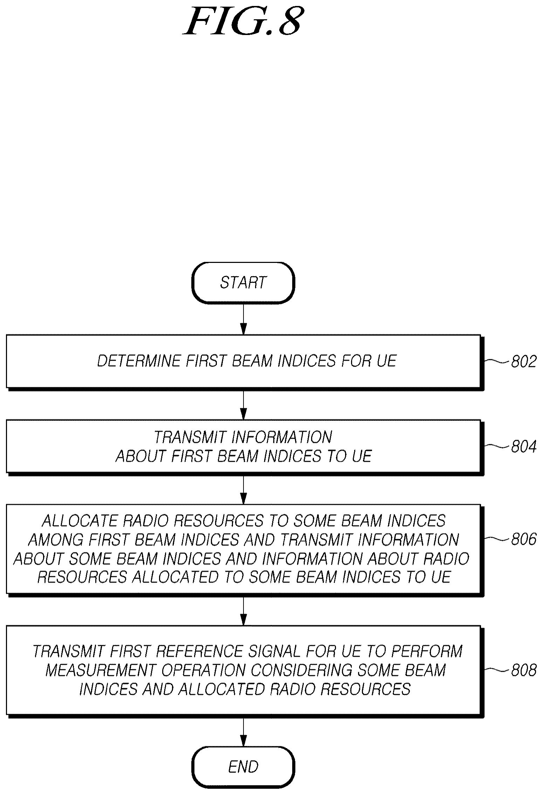

The operations of the base station 102 and the UE 104 according to an embodiment are described below with reference to FIGS. 8 to 11. The operations of the base station 102 and the UE 104 to be described below with reference to FIGS. 8 to 11 may be related to operations of the base station 102 and UE 104 in operation 520 and subsequent operations of FIG. 5.

FIG. 8 is a flowchart illustrating an operation of a base station transmitting reference signals for beamforming in a wireless communication system according to an embodiment.

Referring to FIG. 8, in operation 802, the base station 102 may determine first beam indices for the UE 104 (e.g., beam indices corresponding to the second beams of FIG. 5, or beam indices #0 to #6 of FIG. 6). The first beam indices may represent spatial correlation between beams corresponding to the first beam indices.

In operation 804, the base station 102 may transmit information about the first beam indices to the UE 104. The information about the first beam indices may include beam index information of Table 3, or beam set information as shown in Table 4 or 6, and/or spatial correlation information between the second beams of FIG. 5 as shown in Table 5. For example, the information about the first beam indices may include at least one of beam index information corresponding to beams used for transmission of a first reference signal (e.g., CSI-RS or DMRS), beam index information corresponding to beams not used for transmission of the first reference signal, information related to the transmission direction of beams used for transmission of the first reference signal (e.g., AoD information), or information about physical characteristics of beams used for transmission of the first reference signal (e.g., beam width information and/or beam resolution information).

In operation 806, the base station 102 may allocate radio resources (e.g., the third radio resource 724, fourth radio resource 726, and fifth radio resource 728 of FIG. 7) to some beam indices (e.g., beam indices #0, #3, and #6 of FIGS. 6 and 7) among the first beam indices and transmit information about the some beam indices and information about radio resources allocated to the some beam indices to the UE 104. According to an example, the base station 102 may obtain the some beam indices considering spatial correlation between beams corresponding to the first beam indices. For example, the base station 102 may select some beam indices having a beam index difference value that is a configured value. According to an example, the some beam indices may be a number of beam indices that is smaller than the total number of beam indices.

In operation 808, the base station 102 may transmit a first reference signal for the UE 104 to perform measurement operations considering the some beam indices and allocated radio resources.

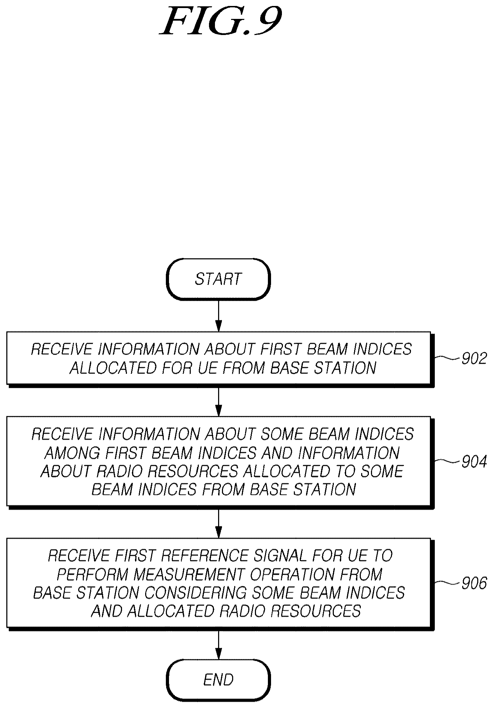

FIG. 9 is a flowchart illustrating an operation of a UE receiving reference signals in a wireless communication system according to an embodiment.

Referring to FIG. 9, in operation 902, the UE 104 may receive information about first beam indices allocated for the UE 104 (e.g., beam indices corresponding to the second beams of FIG. 5, or beam indices #0 to #6 of FIG. 6) from the base station 102.

In operation 904, the UE 104 may receive information about some beam indices (e.g., beam indices #0, #3, and #6 of FIGS. 6 and 7) among the first beam indices and information about radio resources (e.g., the third radio resource 724, fourth radio resource 726, and fifth radio resource 728 of FIG. 7) allocated to the some beam indices from the base station 102.

In operation 906, the UE 104 may receive a first reference signal (e.g., CSI-RS or DMRS) for the UE 104 to perform measurement operations from the base station 102 considering the some beam indices and allocated radio resources. According to an example, the measurement operations may include operations where the UE 104 measures reception performance (e.g., at least one of L1-RSRP, L1-SINR, L3-RSRP, or L3-SINR) corresponding to the some beam indices based on the first reference signal.

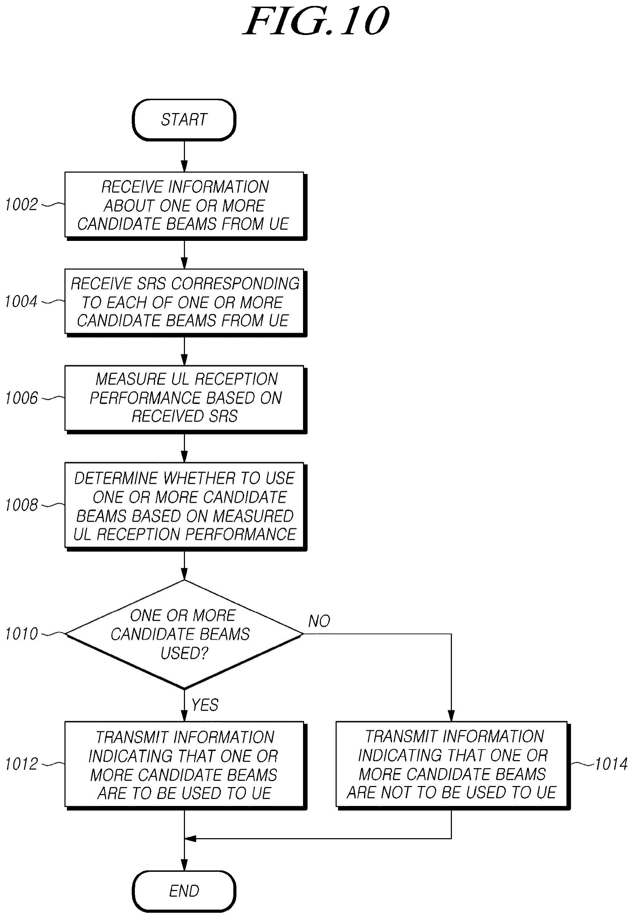

FIG. 10 is a flowchart illustrating operations of a base station after transmitting reference signals in a wireless communication system according to an embodiment.

The operations illustrated in FIG. 10 may represent operations of the base station 102 after transmitting reference signals (e.g., the second reference signal of FIGS. 5 to 7, or the first reference signal of FIG. 8 (e.g., CSI-RS or DMRS)).

Referring to FIG. 10, in operation 1002, the base station 102 may receive information about one or more candidate beams from the UE 104. According to an example, the one or more candidate beams may be one or more beams selected by the UE 104 from among beams of the base station 102 based on DL reception performance. According to an example, the information about the one or more candidate beams may include beam index information corresponding to the one or more candidate beams.

In operation 1004, the base station 102 may receive SRS corresponding to each of the one or more candidate beams from the UE 104.

In operation 1006, the base station 102 may measure UL reception performance for each of the one or more candidate beams based on the received SRS.

In operation 1008, the base station 102 may determine whether to use the one or more candidate beams based on the measured UL reception performance. According to an example, the base station 102 may determine whether to use the one or more candidate beams without receiving SRS.

In operation 1010, when the base station 102 determines to use the one or more candidate beams, in operation 1012, the base station 102 may transmit information indicating that the one or more candidate beams is used to the UE 104. According to an example, the base station 102 may transmit an Ack signal to the UE 104. Alternatively, the base station 102 may transmit information about the one or more candidate beams (e.g., beam index information) as information about beams that the base station 102 will use to the UE 104 by including it in DCI or MAC CE. Alternatively, when the one or more candidate beams are plural, the base station 102 may transmit information (e.g., beam index information) about at least one selected from among the plural candidate beams based on UL reception performance to the UE 104 by including it in DCI or MAC CE. Further, the base station 102 may transmit UL power control information to the UE 104. The UL power control information may include information for controlling UL transmission power and may include information about reference signals for path loss measurement. For example, the UL power control information may include information indicating whether to perform path loss measurement based on a previously used reference signal (e.g., CSI-RS) or based on a new reference signal (e.g., DMRS). When the UE 104 may change reference signals for path loss measurement without indication from the base station 102, transmission of UL power control information may be omitted.

In operation 1014, when the base station 102 determines not to use the one or more candidate beams, in operation 1016, the base station 102 may transmit information indicating that the one or more candidate beams will not be used to the UE 104. According to an example, the base station 102 may transmit a Nack signal to the UE 104. Further, the base station 102 may also transmit information (e.g., beam index information) about beams selected by the base station 102 based on DL or UL reception performance to the UE 104.

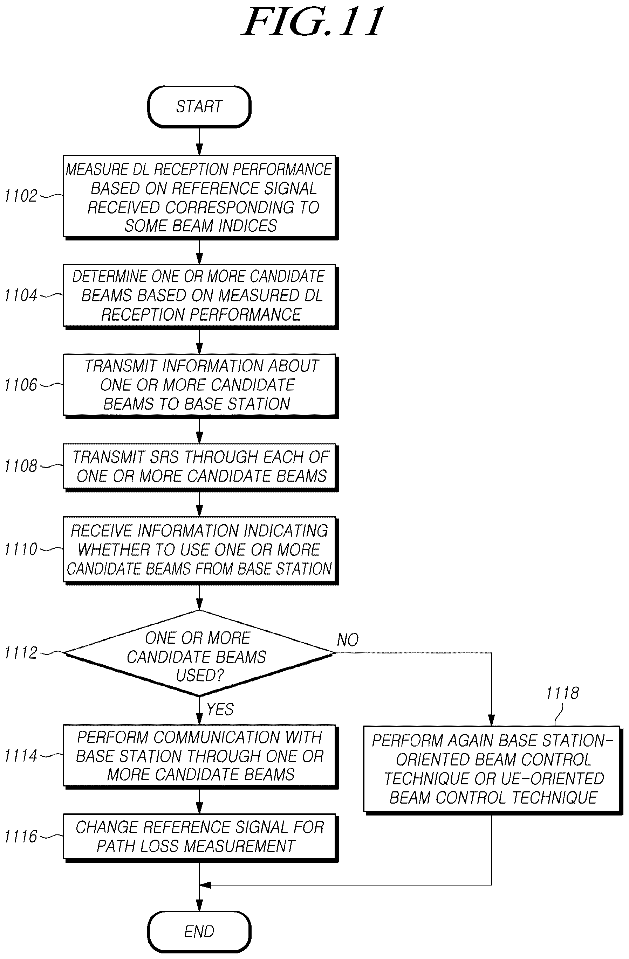

FIG. 11 is a flowchart illustrating operations of a UE after receiving reference signals in a wireless communication system according to an embodiment.

The operations illustrated in FIG. 11 may represent operations of the UE 104 after receiving reference signals (e.g., the second reference signal of FIGS. 5 to 7, or the first reference signal of FIG. 8 (e.g., CSI-RS or DMRS)).

Referring to FIG. 11, in operation 1102, the UE 104 may measure DL reception performance based on reference signals received corresponding to some beam indices.

In operation 1104, the UE 104 may determine one or more candidate beams based on the measured DL reception performance.

According to an example, the UE 104 may measure link quality (e.g., at least one of L1-RSRP, L1-SINR, L3-RSRP, or L3-SINR) related to some beams corresponding to some beam indices, i.e., some beams through which reference signals were transmitted, and estimate link quality related to remaining beams through which reference signals were not transmitted based on the measured link quality and information about spatial correlation between beams, thereby identifying DL reception performance of each of the beams of the base station 102.

In operation 1106, the UE 104 may transmit information about the one or more candidate beams to the base station 102. According to an example, the information about the one or more candidate beams may be beam index information corresponding to the one or more candidate beams.

In operation 1108, the UE 104 may transmit SRS through each of the one or more candidate beams. According to an example, the UE 104 may omit operation 1108.

In operation 1110, the UE 104 may receive information indicating whether the one or more candidate beams are used from the base station 102.

In operation 1112, when the received information indicates that the one or more candidate beams are used, in operation 1114, the UE 104 may use the one or more candidate beams as beams for communication with the base station 102 and perform communication with the base station 102.

In operation 1116, as one or more beams for communication with the base station 102 are determined, the UE 104 may change and use reference signals for path loss measurement. For example, the UE 104 may change and use reference signals for path loss measurement from CSI-RS to DMRS. According to an example, changing reference signals for path loss measurement may be performed by indication from the base station 102 or may be performed without indication from the base station 102.

In operation 1112, when the received information indicates that the one or more candidate beams will not be used, in operation 1118, the UE 104 may perform the base station-oriented beam control technique as illustrated in FIG. 2 or FIG. 3 or the UE-oriented beam control technique as illustrated in FIG. 5 again. Alternatively, when information about beams selected by the base station 102 (e.g., beam index information corresponding to beams selected by the base station 102) is received, the UE 104 may use the beams selected by the base station 102 as beams for communication with the base station 102 based on the received information.

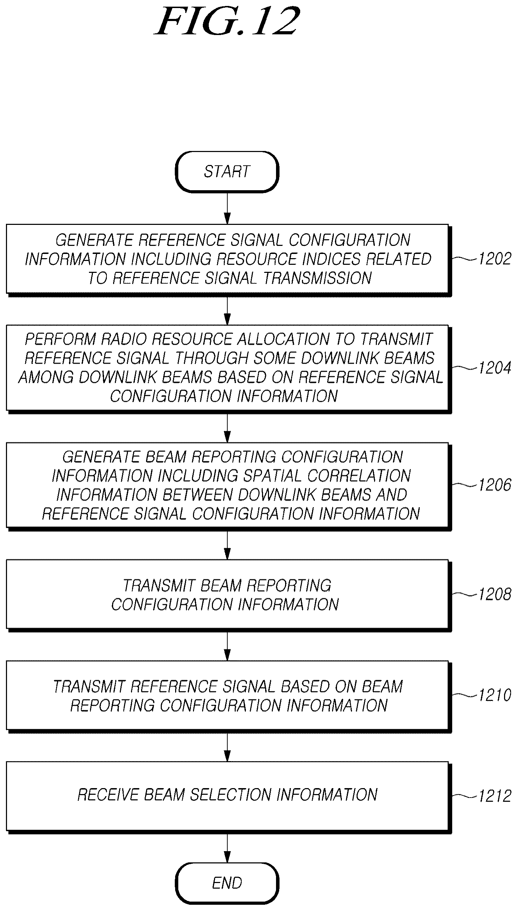

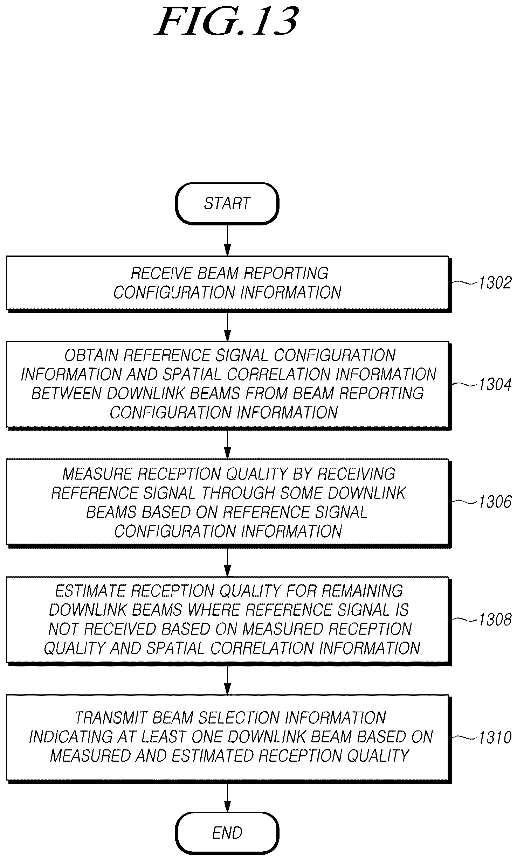

As illustrated in the above-described embodiments, the base station 102 may define and use beam indices for indicating beams of the base station 102 as separate information distinguished from resource indices (e.g., resource indices related to reference signals such as CRI or SSBRI). As another method, the base station 102 may use resource indices as beam indices without separately defining beam indices. In this case, instead of operations where the base station 102 generates information about beam indices and information about radio resources allocated to beam indices and transmits them to the UE 104 (e.g., operations 520 and 522 of FIG. 5), operations of the base station 102 and UE 104 as illustrated in FIGS. 12 and 13 may be performed.

FIG. 12 is a flowchart illustrating an operation of a base station transmitting beam reporting configuration information based on resource index information in a wireless communication system according to an embodiment.

Referring to FIG. 12, in operation 1202, the base station 102 may generate reference signal configuration information including resource indices related to reference signal transmission. The reference signal configuration information may include information that may be included in RRC configuration information or MAC CE. For example, the reference signal configuration information may include at least one of first configuration information, second configuration information, or third configuration information.

According to an example, the first configuration information may be included in RRC configuration information and may include information as shown in Table 7 below.

**[Table 7]**

| Radio resource information | Resource index information |
|---|---|
| No resource information | #R0 |
| Basic resource allocation information | #R1 |
| No resource information | #R2 |
| Basic resource allocation information | #R3 |
| No resource information | #R4 |
| No resource information | #R5 |
| No resource information | #R6 |

Referring to Table 7, the first configuration information may include radio resource information and resource index information. The radio resource information may include information indicating that there is no resource information corresponding to each resource index or basic resource allocation information. The basic radio resource allocation information may include at least one of information about radio resources on a time axis and/or radio resources on a frequency axis, information about transmission power, signal sequences, or information related to signal patterns. According to an example, basic resource allocation information may be configured corresponding to resource indices #R1 and #R3. According to an example, when configuring resource indices, the base station 102 may consider correlations between downlink beams similarly to the beam indices described above. As an example, the base station 102 may generate resource indices to represent correlations between downlink beams. The correlations between downlink beams may represent spatial correlation between downlink beams. For example, the base station 102 may allocate resource indices with greater index differences to downlink beams with smaller spatial correlation. Alternatively, the base station 102 may allocate resource indices with smaller index differences to downlink beams with greater spatial correlation. Therefore, adjacent downlink beams may have resource indices with smaller index differences.

According to an example, the base station 102 may not determine resource indices considering spatial correlation between downlink beams. In this case, the base station 102 may separately generate information representing spatial correlation between downlink beams. For example, the base station 102 may generate information representing spatial correlation between one downlink beam (e.g., beam #0) and other downlink beams (e.g., each of beams #1 to #6) for downlink beams (e.g., beam #0 to beam #6).

According to an example, the second configuration information may be included in RRC configuration information or MAC CE and may include information as shown in Table 8 below.

**[Table 8]**

| Reference signal information | Resource index information |
|---|---|
| RS #0 | #R0 |
| RS #1 | #R1 |
| RS #2 | #R2 |
| RS #3 | #R3 |
| RS #4 | #R4 |
| RS #5 | #R5 |
| RS #6 | #R6 |

Referring to Table 8, the second configuration information may include reference signal information and resource index information. The reference signal information may indicate reference signals corresponding to each resource index information. For example, reference signal information RS #1 may indicate a reference signal corresponding to resource index information #R1, and the indicated reference signal may be a reference signal transmitted using radio resources indicated by resource index information #R1.

According to an example, the third configuration information may be MAC CE and may include information as shown in Table 9 below.

**[Table 9]**

| Downlink beam information | Reference signal information |
|---|---|
| Beam #0 | RS #0 |
| Beam #1 | RS #1 |
| Beam #2 | RS #2 |
| Beam #3 | RS #3 |
| Beam #4 | RS #4 |
| Beam #5 | RS #5 |
| Beam #6 | RS #6 |

Referring to Table 9, the third configuration information may include downlink beam information and reference signal information. The downlink beam information may indicate downlink beams corresponding to each reference signal information. For example, downlink beam information beam #1 may indicate a downlink beam corresponding to reference signal information RS #1, and the indicated downlink beam may be a downlink beam used for transmitting reference signals indicated by reference signal information RS #1.

In operation 1204, the base station 102 may perform radio resource allocation for transmitting reference signals through some downlink beams among downlink beams based on the reference signal configuration information. For example, when the reference signal configuration information includes first configuration information as shown in Table 7, the base station 102 may perform radio resource allocation based on radio resource information corresponding to resource indices #R1 and #R3.

In operation 1206, the base station 102 may generate beam reporting configuration information including reference signal configuration information and spatial correlation information between downlink beams. According to an example, if resource indices are generated without considering spatial correlation between downlink beams, the spatial correlation information between downlink beams may include information directly representing spatial correlation between downlink beams. For example, the spatial correlation information between downlink beams may include information representing spatial correlation between any one beam among downlink beams and each of remaining beams among downlink beams.

In operation 1208, the base station 102 may transmit beam reporting configuration information to the UE 104.

In operation 1210, the base station 102 may transmit reference signals to the UE 104 based on the beam reporting configuration information.

In operation 1212, the base station 102 may receive beam selection information from the UE 104. The beam selection information may be information indicating at least one downlink beam selected by the UE 104 from among downlink beams.

FIG. 13 is a flowchart illustrating an operation of a UE receiving beam reporting configuration information based on resource index information in a wireless communication system according to an embodiment.

Referring to FIG. 13, in operation 1302, the UE 104 may receive beam reporting configuration information from the base station 102.

In operation 1304, the UE 104 may obtain reference signal configuration information and spatial correlation information between downlink beams from the beam reporting configuration information. The reference signal configuration information may include radio resource allocation information for some downlink beams among downlink beams. The spatial correlation information between downlink beams may include information about resource indices corresponding to downlink beams or information representing spatial correlation between downlink beams.

In operation 1306, the UE 104 may receive reference signals through some downlink beams based on the reference signal configuration information and measure reception quality. For example, the UE 104 may receive reference signals (e.g., RS #1 and RS #3) through some downlink beams (e.g., beam #1 and beam #3) of the base station 102 using radio resources allocated to some downlink beams based on resource index information (e.g., #R1 and #R3) included in the reference signal configuration information. The UE 104 may measure reception quality for some downlink beams through reference signal reception operations. As an example, reception quality may be one of RSRP, RSRQ, or SINR.

In operation 1308, the UE 104 may estimate reception quality for remaining downlink beams through which reference signals were not received based on spatial correlation information and measured reception quality. For example, the UE 104 may estimate reception quality for remaining downlink beams (e.g., beam #0, beam #2, beam #4, beam #5, and beam #6) except for some downlink beams among downlink beams based on spatial correlation information between downlink beams (e.g., beam #0 to beam #6) obtained from beam reporting configuration information and reception quality measured for some downlink beams (e.g., beam #1 and beam #3).

In operation 1310, the UE 104 may transmit beam selection information indicating at least one downlink beam to the base station 102 based on measured and estimated reception quality. According to an example, the UE 104 may transmit information about downlink beams having reception quality above a threshold among downlink beams or information about a specific number (or configured number) of downlink beams determined in order of good reception quality to the base station 102 based on measured and estimated reception quality.

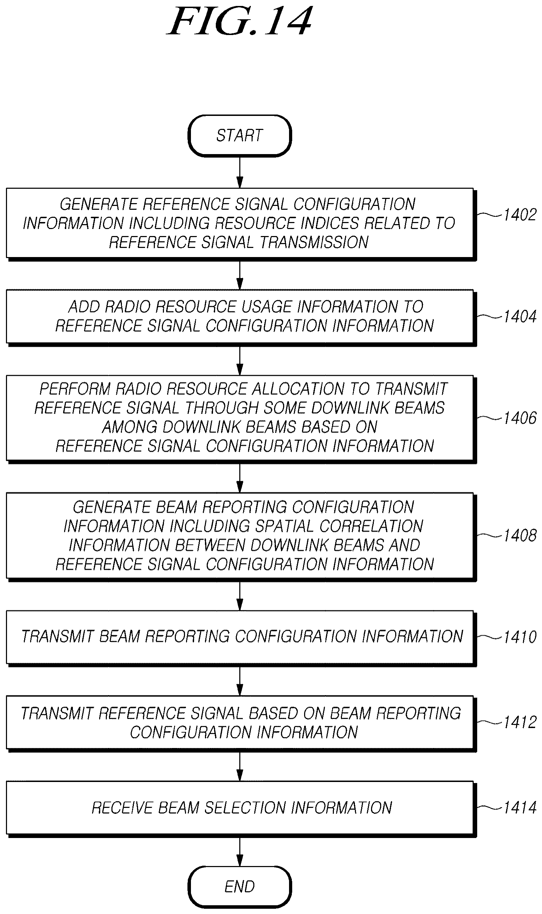

FIG. 14 is a flowchart illustrating another operation of a base station transmitting beam reporting configuration information based on resource index information in a wireless communication system according to an embodiment.

Referring to FIG. 14, in operation 1402, the base station 102 may generate reference signal configuration information including resource indices related to reference signal transmission.

In operation 1404, the base station 102 may add radio resource usage information to the reference signal configuration information.

The reference signal configuration information may include information that may be included in RRC configuration information or MAC CE. For example, the reference signal configuration information may include at least one of fourth configuration information, fifth configuration information, or sixth configuration information. The radio resource usage information may be included in the sixth configuration information.

According to an example, the fourth configuration information may be included in RRC configuration information and may include information as shown in Table 10 below.

**[Table 10]**

| Radio resource information | Resource index information |
|---|---|
| Basic resource allocation information | #R0 |
| Basic resource allocation information | #R1 |
| No resource information | #R2 |
| Basic resource allocation information | #R3 |
| Basic resource allocation information | #R4 |
| Basic resource allocation information | #R5 |
| Basic resource allocation information | #R6 |

Referring to Table 10, the fourth configuration information may include radio resource information and resource index information. The radio resource information may include information indicating that there is no resource information corresponding to each resource index information or basic resource allocation information. The basic radio resource allocation information may include at least one of information about radio resources on a time axis and/or radio resources on a frequency axis, information about transmission power, signal sequences, or information related to signal patterns. According to an example, basic resource allocation information may be configured corresponding to resource index information #R0, #R2, and #R3 to #R6.

According to an example, the fifth configuration information may be included in RRC configuration information or MAC CE and may include the same information as the second configuration information of Table 8 discussed above.

According to an example, the sixth configuration information may be MAC CE and may include information as shown in Table 11 below.

**[Table 11]**

| Downlink beam information | Reference signal information | Radio resource usage information |
|---|---|---|
| Beam #0 | RS #0 | No (Off) |
| Beam #1 | RS #1 | Yes (On) |
| Beam #2 | RS #2 | No (Off) |
| Beam #3 | RS #3 | Yes (On) |
| Beam #4 | RS #4 | No (Off) |
| Beam #5 | RS #5 | No (Off) |
| Beam #6 | RS #6 | No (Off) |

Referring to Table 11, the sixth configuration information may include downlink beam information, reference signal information, and radio resource usage information. The sixth configuration information may be generated in the form in which radio resource usage information is added to the third configuration information as shown in Table 9. The radio resource usage information may include information indicating whether radio resources for transmitting reference signals are used. According to an example, as shown in Table 10, even when basic resource allocation information is configured corresponding to resource index information #R0, #R4 to #R6, when the base station 102 does not transmit reference signals through beam #0 and beams #4 to #6, the corresponding radio resources may not be used. In this case, the base station 102 may add radio resource usage information as shown in Table 11 to the reference signal configuration information so that unused radio resources may be used for transmission/reception on other channels.

In operation 1406, the base station 102 may perform radio resource allocation for transmitting reference signals through some downlink beams among downlink beams based on the reference signal configuration information.

In operation 1408, the base station 102 may generate beam reporting configuration information including reference signal configuration information and spatial correlation information between downlink beams.

According to an example, if resource indices (e.g., #R1 to #R6) are generated considering spatial correlation between downlink beams (e.g., beam #0 to beam #6), the spatial correlation information between downlink beams may include information about resource indices (e.g., #R1 to #R6) corresponding to downlink beams or may not be included in beam reporting configuration information.

According to an example, if resource indices are generated without considering spatial correlation between downlink beams, the spatial correlation information between downlink beams may include information directly representing spatial correlation between downlink beams. For example, the spatial correlation information between downlink beams may include information representing spatial correlation between any one downlink beam among downlink beams and each of remaining downlink beams among downlink beams.

In operation 1412, the base station 102 may transmit reference signals to the UE 104 based on the beam reporting configuration information.

In operation 1414, the base station 102 may receive beam selection information from the UE 104. The beam selection information may be information indicating at least one downlink beam selected by the UE 104 from among downlink beams.

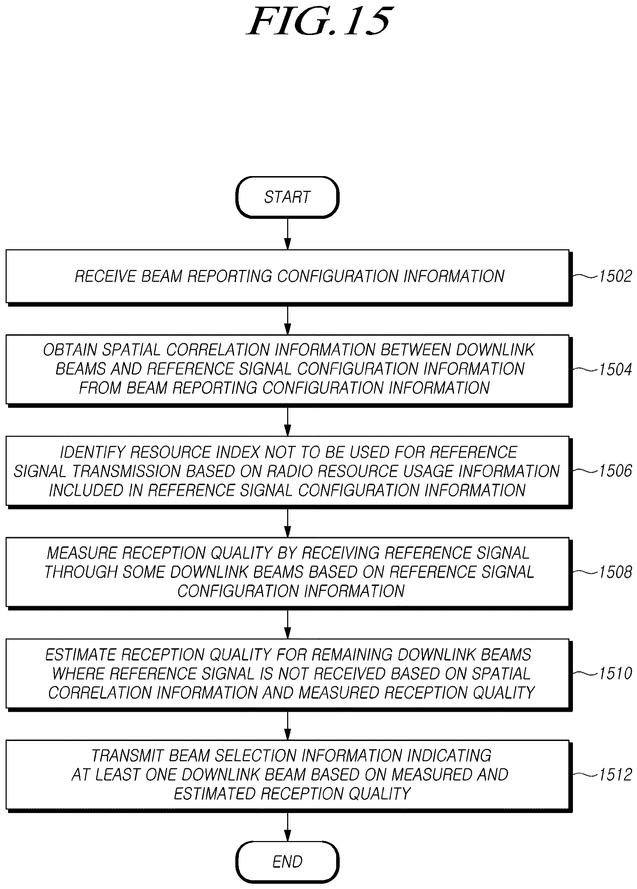

FIG. 15 is a flowchart illustrating another operation of a UE receiving beam reporting configuration information based on resource index information in a wireless communication system according to an embodiment.

Referring to FIG. 15, in operation 1502, the UE 104 may receive beam reporting configuration information from the base station 102.

In operation 1504, the UE 104 may obtain reference signal configuration information and spatial correlation information between downlink beams from the beam reporting configuration information. The spatial correlation information between downlink beams may not be included in beam reporting configuration information if resource indices are generated considering spatial correlation between downlink beams.

In operation 1506, the UE 104 may identify resource indices that will not be used for reference signal transmission based on radio resource usage information included in the reference signal configuration information. According to an example, the UE 104 may determine that radio resources indicated by the identified resource indices may be used for transmission/reception on other channels.

In operation 1508, the UE 104 may receive reference signals through some downlink beams based on the reference signal configuration information and measure reception quality. For example, the UE 104 may receive reference signals (e.g., RS #1 and RS #3) through some downlink beams (e.g., beam #1 and beam #3) of the base station 102 using radio resources allocated to some downlink beams based on resource index information (e.g., #R1 and #R3) included in the reference signal configuration information. The UE 104 may measure reception quality for some downlink beams through reference signal reception operations. As an example, reception quality may be one of RSRP, RSRQ, or SINR.

In operation 1510, the UE 104 may estimate reception quality for remaining downlink beams through which reference signals were not received based on spatial correlation information and measured reception quality. For example, the UE 104 may estimate reception quality for remaining downlink beams (e.g., beam #0, beam #2, beam #4, beam #5, and beam #6) except for some downlink beams among downlink beams based on spatial correlation information between downlink beams (e.g., beam #0 to beam #6) obtained from beam configuration information and reception quality measured for some downlink beams (e.g., beam #1 and beam #3).

In operation 1512, the UE 104 may transmit beam selection information indicating at least one downlink beam to the base station 102 based on measured and estimated reception quality. According to an example, the UE 104 may transmit information about downlink beams having reception quality above a threshold among downlink beams or information about a specific number (or configured number) of downlink beams determined in order of good reception quality to the base station 102 based on measured and estimated reception quality.

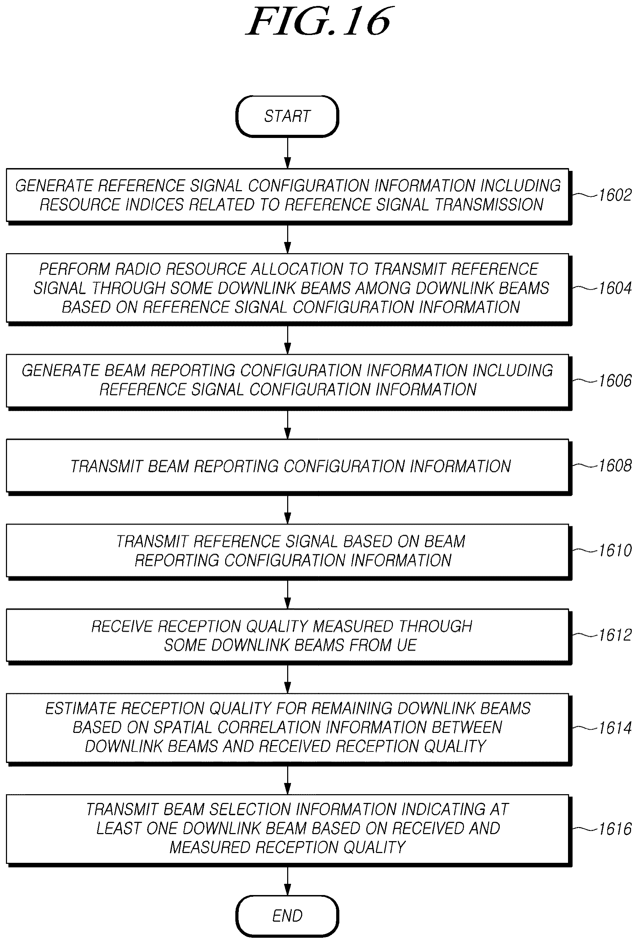

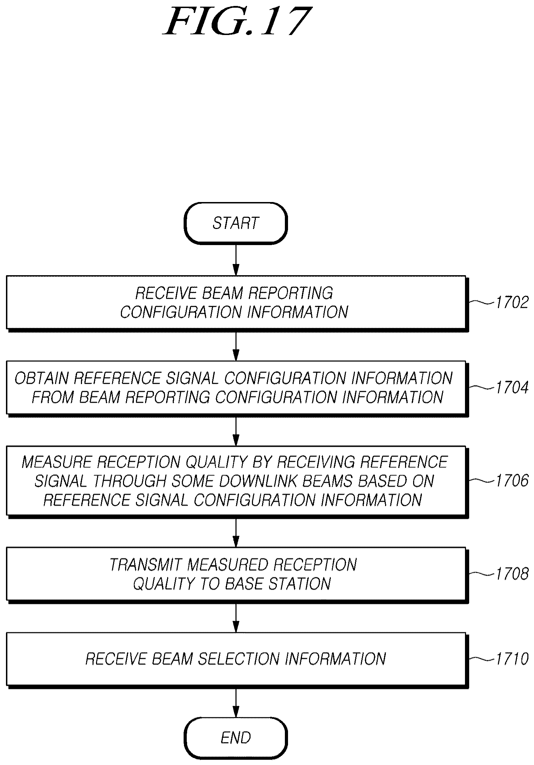

According to an example, the base station 102 may use spatial correlation information between beams directly without transmitting spatial correlation information between beams to the UE 102. In this case, the UE 102 may perform measurement operations for some beams, and the base station 102 may perform estimation operations for remaining beams based on spatial correlation information between beams. Related operations of the base station 102 and the UE 104 may be as illustrated in FIGS. 16 and 17, respectively.

FIG. 16 is a flowchart illustrating an operation of a base station selecting optimal beams based on spatial correlation information in a wireless communication system according to an embodiment.

Referring to FIG. 16, in operation 1602, the base station 102 may generate reference signal configuration information including resource indices related to reference signal transmission. For example, the reference signal configuration information may include at least one of the first configuration information, second configuration information, or third configuration information discussed above. Alternatively, the reference signal configuration information may include at least one of the fourth configuration information, fifth configuration information, or sixth configuration information discussed above.

In operation 1604, the base station 102 may perform radio resource allocation for transmitting reference signals through some downlink beams among downlink beams based on the reference signal configuration information.

In operation 1606, the base station 102 may generate beam reporting configuration information including reference signal configuration information.

In operation 1608, the base station 102 may transmit beam reporting configuration information to the UE 104.

In operation 1610, the base station 102 may transmit reference signals based on the beam reporting configuration information. According to an example, the base station 102 may transmit reference signals using reference signal configuration information included in the beam reporting configuration information. For example, the base station 102 may transmit reference signals (e.g., RS #1 and RS #3) to the UE 104 through some downlink beams (e.g., beam #0 and beam #3) using radio resources for some downlink beams based on resource index information (e.g., #R1 and #R3) included in the reference signal configuration information.

In operation 1612, the base station 102 may receive reception quality measured through some downlink beams from the UE 104. According to an example, the reception quality may be reception quality for some downlink beams (e.g., beam #0 and beam #3) that the UE 104 measured through reference signal reception operations and may be one of RSRP, RSRQ, or SINR.

In operation 1614, the base station 102 may estimate reception quality for remaining downlink beams based on the received reception quality and spatial correlation information between downlink beams. According to an example, the base station 102 may estimate reception quality for remaining beams (e.g., beam #0, beam #2, beam #4, beam #5, and beam #6) except for some downlink beams among beams of the base station 102 based on reception quality of some downlink beams (e.g., beam #0 and beam #3) and spatial correlation information between downlink beams (e.g., beam #0 to beam #6).

In operation 1616, the base station 102 may transmit beam selection information indicating at least one downlink beam to the UE 104 based on received and estimated reception quality. According to an example, the base station 102 may transmit information about downlink beams having reception quality above a threshold among downlink beams or information about a specific number (or configured number) of downlink beams determined in order of good reception quality to the UE 104 based on received and estimated reception quality.

FIG. 17 is a flowchart illustrating an operation of a UE receiving information about optimal beams selected based on spatial correlation information from a base station in a wireless communication system according to an embodiment.

Referring to FIG. 17, in operation 1702, the UE 104 may receive beam reporting configuration information from the base station 102.

In operation 1704, the UE 104 may obtain reference signal configuration information from the beam reporting configuration information.

In operation 1706, the UE 104 may receive reference signals through some downlink beams based on the reference signal configuration information and measure reception quality. For example, the UE 104 may receive reference signals (e.g., RS #1 and RS #3) through some downlink beams (e.g., beam #1 and beam #3) of the base station 102 using radio resources allocated to some downlink beams based on resource index information (e.g., #R1 and #R3) included in the reference signal configuration information. The UE 104 may measure reception quality for some downlink beams through reference signal reception operations. As an example, reception quality may be one of RSRP, RSRQ, or SINR.

In operation 1708, the UE 104 may transmit reception quality measured for some downlink beams to the base station 102.

In operation 1710, the UE 104 may receive beam selection information from the base station 102. According to an example, the beam selection information may include information indicating at least one downlink beam selected by the base station 102. The at least one downlink beam may be at least one among downlink beams and may correspond to or not correspond to some downlink beams.

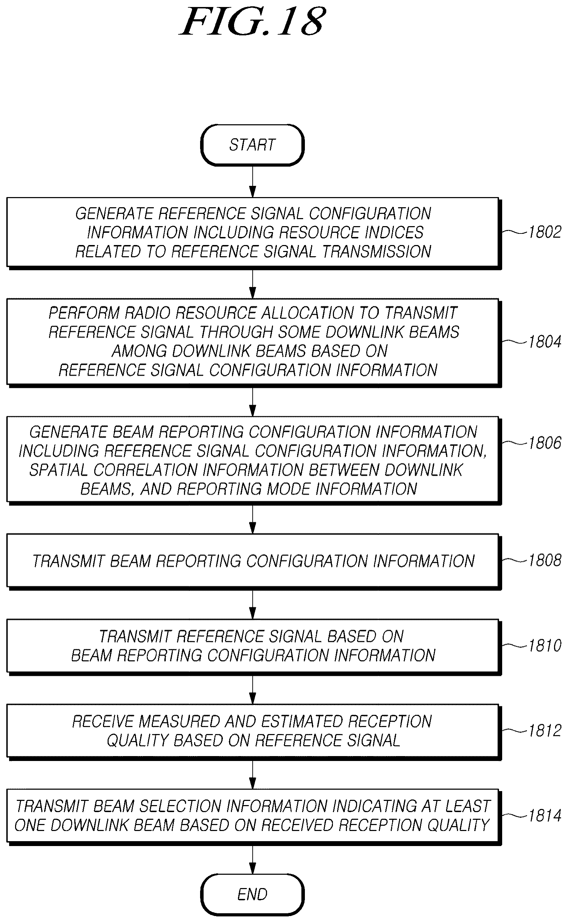

FIG. 18 is a flowchart illustrating an operation of a base station selecting optimal beams based on measurement values received based on reporting mode information in a wireless communication system according to an embodiment.

Referring to FIG. 18, in operation 1802, the base station 102 may generate reference signal configuration information including resource indices related to reference signal transmission. For example, the reference signal configuration information may include at least one of the first configuration information, second configuration information, or third configuration information discussed above. Alternatively, the reference signal configuration information may include at least one of the fourth configuration information, fifth configuration information, or sixth configuration information discussed above.

In operation 1804, the base station 102 may perform radio resource allocation for transmitting reference signals through some downlink beams among downlink beams based on the reference signal configuration information.

In operation 1806, the base station 102 may generate beam reporting configuration information including reference signal configuration information, spatial correlation information between downlink beams, and reporting mode information. According to an example, the reference signal configuration information may include resource index information (e.g., #R1 and #R3) indicating radio resources allocated to some downlink beams (e.g., beam #1 and beam #3).

According to an example, if resource indices are generated considering spatial correlation between downlink beams (e.g., beam #0 to beam #6), the spatial correlation information between downlink beams may include information about resource indices (e.g., #R1 to #R6) corresponding to downlink beams.

According to an example, if resource indices are generated without considering spatial correlation between downlink beams, the spatial correlation information between downlink beams may include information directly representing spatial correlation between downlink beams. For example, the spatial correlation information between downlink beams may include information representing spatial correlation between any one downlink beam among downlink beams and each of remaining beams among downlink beams.

According to an example, the reporting mode information may include information indicating one or more downlink beams for which the UE 104 should report reception quality. For example, the reporting mode information may include information indicating beam #0 to beam #6 as downlink beams for which the UE 104 should report reception quality.

In operation 1808, the base station 102 may transmit beam reporting configuration information to the UE 104.

In operation 1810, the base station 102 may transmit reference signals based on the beam reporting configuration information. According to an example, the base station 102 may transmit reference signals using reference signal configuration information included in the beam reporting configuration information. For example, the base station 102 may transmit reference signals (e.g., RS #1 and RS #3) to the UE 104 through some downlink beams (e.g., beam #1 and beam #3) using radio resources for some downlink beams based on resource index information (e.g., #R1 and #R3) included in the reference signal configuration information.

In operation 1812, the base station 102 may receive reception quality measured and estimated based on reference signals from the UE 104.

In operation 1814, the base station 102 may transmit beam selection information indicating at least one downlink beam among downlink beams to the UE 104 based on the received reception quality.

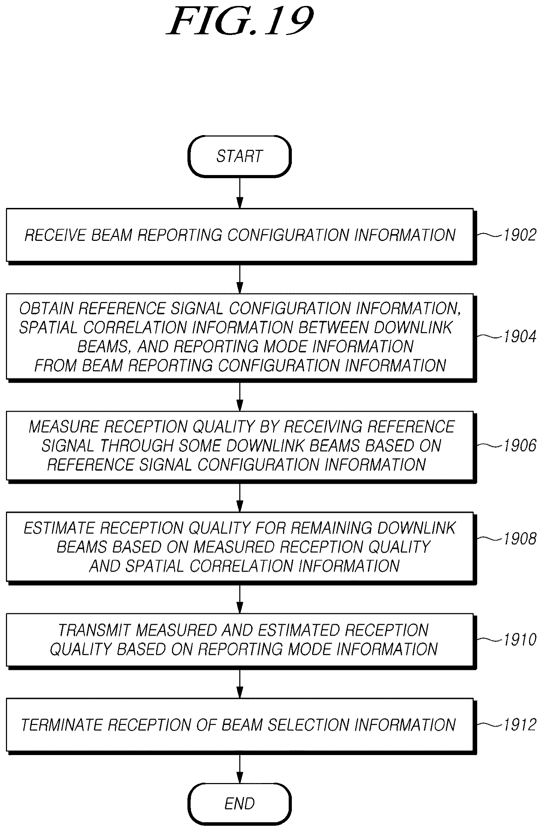

FIG. 19 is a flowchart illustrating an operation of a UE reporting measurement values to a base station based on reporting mode information in a wireless communication system according to an embodiment.

Referring to FIG. 19, in operation 1902, the UE 104 may receive beam reporting configuration information from the base station 102.

In operation 1904, the UE 104 may obtain reference signal configuration information, spatial correlation information between downlink beams, and reporting mode information from the beam reporting configuration information.

In operation 1906, the UE 104 may receive reference signals through some downlink beams based on the reference signal configuration information and measure reception quality. For example, the UE 104 may receive reference signals (e.g., RS #1 and RS #3) through some downlink beams (e.g., beam #1 and beam #3) of the base station 102 using radio resources allocated to some downlink beams based on resource index information (e.g., #R1 and #R3) included in the reference signal configuration information. The UE 104 may measure reception quality for some downlink beams through reference signal reception operations. As an example, reception quality may be one of RSRP, RSRQ, or SINR.

In operation 1908, the UE 104 may estimate reception quality for remaining downlink beams based on reception quality measured in operation 1906 and spatial correlation information. For example, the UE 104 may estimate reception quality for remaining downlink beams (e.g., beam #0, beam #2, beam #4, beam #5, and beam #6) except for some downlink beams among downlink beams based on reception quality measured for some downlink beams (e.g., beam #1 and beam #3) and spatial correlation information between downlink beams (e.g., beam #0 to beam #6).

In operation 1910, the UE 104 may transmit measured and estimated reception quality to the base station 102 based on reporting mode information. According to an example, when the reporting mode information includes information indicating beam #0 to beam #6, the UE 104 may transmit reception quality measured for some downlink beams (e.g., beam #1 and beam #3) and reception quality estimated for remaining downlink beams (e.g., beam #0, beam #2, beam #4, beam #5, and beam #6) to the base station 102.

In operation 1912, the UE 104 may receive beam selection information indicating at least one downlink beam selected by the base station 102 from among downlink beams from the base station 102.

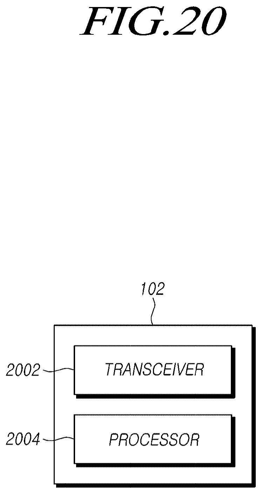

FIG. 20 is a block diagram illustrating a base station according to an embodiment.

Referring to FIG. 20, the base station 102 may include a transceiver 2002 and a processor 2004.

The transceiver 2002 may communicate with the UE 104 or other network entities. The transceiver 2002 may support various technologies for wireless communication. According to an example, the transceiver 2002 may support 5G networks after 4G networks and next-generation communication technologies, e.g., new radio access technology.

The processor 2004 may be operatively connected to the transceiver 2002, may include processing circuitry, and may control the overall operation of the transceiver 1204. According to an example, the processor 2004 may perform the above-described operations of the base station 102. For example, the processor 2004 may perform the following operations.

The processor 2004 may determine first beam indices for the UE 104 (e.g., beam indices corresponding to the second beams of FIG. 5, or beam indices #0 to #6 of FIG. 6). The first beam indices may represent spatial correlation between beams corresponding to the first beam indices.

The processor 2004 may transmit information about the first beam indices to the UE 104. The information about the first beam indices may include beam index information of Table 3, or beam set information as shown in Table 4 or 6, and/or spatial correlation information between the second beams of FIG. 5 as shown in Table 5. For example, the information about the first beam indices may include at least one of beam index information corresponding to beams used for transmission of a first reference signal (e.g., CSI-RS or DMRS), beam index information corresponding to beams not used for transmission of the first reference signal, information related to the transmission direction of beams used for transmission of the first reference signal (e.g., AoD information), or information about physical characteristics of beams used for transmission of the first reference signal (e.g., beam width information and/or beam resolution information).

The processor 2004 may allocate radio resources (e.g., the third radio resource 724, fourth radio resource 726, and fifth radio resource 728 of FIG. 7) to some beam indices (e.g., beam indices #0, #3, and #6 of FIGS. 6 and 7) among the first beam indices and control the transceiver 2002 to transmit information about the some beam indices and information about radio resources allocated to the some beam indices to the UE 104. According to an example, the processor 2004 may obtain the some beam indices considering spatial correlation between beams corresponding to the first beam indices. For example, the processor 2004 may select some beam indices having a beam index difference value that is a configured value. According to an example, the some beam indices may be a number of beam indices that is smaller than the total number of beam indices.

The processor 2004 may control the transceiver 2002 to transmit a first reference signal for the UE 104 to perform measurement operations considering the some beam indices and allocated radio resources.

The processor 2004 may obtain at least one second beam index by initial beam configuration and allow the UE-oriented beam control based on the first beam indices considering performance requirements of the UE 104 in response to obtaining the at least one second beam index. The performance requirements of the UE 104 may include information about cell state or performance of the UE 104. The first beam indices may correspond to beams having higher beam directionality than at least one beam corresponding to the at least one second beam index.

The processor 2004 may receive information indicating one or more candidate beam indices from among the first beam indices from the UE 104 in response to transmission of the first reference signal. The processor 2004 may determine at least one beam index for communication with the UE 104 considering the one or more candidate beam indices and control the transceiver 2002 to transmit information about the determined at least one beam index to the UE 1204. The one or more candidate beam indices may be determined based on reception performance measured by the first reference signal or reception performance estimated based on measured reception performance and spatial correlation between beams.

The processor 2004 may configure UL power control information for the determined at least one beam index and control the transceiver 2002 to transmit the configured UL power control information to the UE 104. The configured UL power control information may include at least one of reference signal information for path loss measurement, target reception power information of the base station 102, power offset information, or path loss compensation factor information. The reference signal information may include information indicating a second reference signal that is transmitted aperiodically and is different from the first reference signal.

The processor 2004 may receive SRS corresponding to the one or more candidate beam indices from the UE 104 and obtain reception performance for the one or more candidate beam indices based on the received SRS.

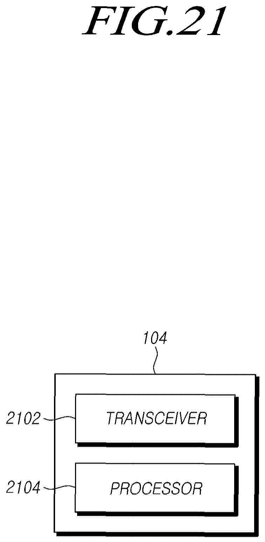

FIG. 21 is a block diagram illustrating a UE according to an embodiment.

Referring to FIG. 21, the UE 104 may include a transceiver 2102 and a processor 2104.

The transceiver 2102 may communicate with the base station 102 or other network entities. The transceiver 2102 may support various technologies for wireless communication. As an example, the transceiver 2102 may support 5G networks after 4G networks and next-generation communication technologies, e.g., new radio access technology.

The processor 2104 is operatively connected to the transceiver 2102, may include processing circuitry, and may control the overall operation of the transceiver 2102. According to an example, the processor 2104 may perform the above-described operations of the UE 104. For example, the processor 2104 may perform the following operations.

The processor 2104 may receive information about first beam indices allocated for the UE 104 (e.g., beam indices corresponding to the second beams of FIG. 5, or beam indices #0 to #6 of FIG. 6) from the base station 102.

The processor 2104 may receive information about some beam indices (e.g., beam indices #0, #3, and #6 of FIGS. 6 and 7) among the first beam indices and information about radio resources (e.g., the third radio resource 724, fourth radio resource 726, and fifth radio resource 728 of FIG. 7) allocated to the some beam indices from the base station 104 through the transceiver 2102.

The processor 2104 may receive a first reference signal (e.g., CSI-RS or DMRS) for performing measurement operations from the base station 102 considering the some beam indices and allocated radio resources.

The processor 2104 may measure reception performance (e.g., at least one of L1-RSRP, L1-SINR, L3-RSRP, or L3-SINR) corresponding to the some beam indices based on the first reference signal.

The processor 2104 may estimate reception performance (e.g., at least one of L1-RSRP, L1-SINR, L3-RSRP, or L3-SINR) corresponding to remaining beam indices except for the some beam indices among the first beam indices based on measured reception performance and spatial correlation between beams corresponding to the first beam indices.

The processor 2104 may determine one or more candidate beam indices from among the first beam indices based on measured reception performance and estimated reception performance.

The processor 2104 may control the transceiver 2102 to transmit information indicating the one or more candidate beam indices to the base station 102. The one or more candidate beam indices may include at least one beam index selected considering measured reception performance among the some beam indices through which the first reference signal was received, or at least one beam index selected considering estimated reception performance among remaining beam indices through which the first reference signal was not received.

The processor 2104 may receive information about at least one beam index for communication with the base station 102 determined considering the one or more candidate beam indices from the base station 102 through the transceiver 2102.

The processor 2104 may receive UL power control information for the at least one beam index from the base station 102 and control UL power for the at least one beam index based on the configured UL power control information. According to an example, the configured UL power control information may include at least one of reference signal information for path loss measurement, target reception power information of the base station 102, power offset information, or path loss compensation factor information. The reference signal information may include information indicating a second reference signal that is transmitted aperiodically.

The processor 2104 may obtain at least one second beam index by initial beam configuration and receive a UE performance identification request from the base station 102 in response to obtaining the at least one second beam index. The processor 2104 may transmit performance information for determining whether to perform the UE-oriented beam control based on the first beam indices to the base station 102 in response to the UE performance identification request. The first beam indices may correspond to beams having higher beam directionality than at least one beam corresponding to the at least one second beam index.

The processor 2104 may transmit SRS corresponding to the one or more candidate beam indices to the base station 102.

It should be noted that the configuration diagrams, signal flowcharts, flowcharts, and operation procedure example diagrams illustrated in FIGS. 1 to 21 are not intended to limit the scope of rights of the embodiments of the disclosure. In other words, all components, entities, or operations described in connection with FIGS. 1 to 21 should not be interpreted as essential components for the embodiments of the disclosure, and the embodiments of the disclosure may be implemented within a range that does not impair the essence of the embodiments of the disclosure even by including only some components.

The operations of the above-described embodiments may be implemented by providing a memory device storing a corresponding program code in any component of the device. In other words, the processors in the base station 102 and the UE 104 may execute the above-described operations by reading and executing the program codes stored in the memory device by a controller or a central processing unit (CPU).

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. A method for a base station to support beamforming in a wireless communication system, the method comprising:
determining first beam indices for a UE (user equipment);
transmitting, to the UE, information about the first beam indices;
allocating radio resources to some beam indices among the first beam indices, and transmitting, to the UE, information about the some beam indices and information about the radio resources allocated to the some beam indices; and
transmitting a first reference signal for the UE to perform a measurement operation considering the some beam indices and the allocated radio resources,
wherein the first beam indices represent spatial correlation between beams corresponding to the first beam indices.

2. The method of claim 1, further comprising:
obtaining at least one second beam index by an initial beam configuration; and
in response to obtaining the at least one second beam index, allowing UE-oriented beam control based on the first beam indices considering a performance requirement of the UE,
wherein the performance requirement of the UE includes information about cell state or performance of the UE, and
wherein the first beam indices correspond to beams having higher beam directionality than at least one beam corresponding to the at least one second beam index.

3. The method of claim 1, further comprising:
in response to transmitting the first reference signal, receiving, from the UE, information indicating one or more candidate beam indices among the first beam indices;
determining at least one beam index for communication with the UE considering the one or more candidate beam indices; and
transmitting, to the UE, information about the determined at least one beam index,
wherein the one or more candidate beam indices are determined based on reception performance measured by the first reference signal, or reception performance estimated based on the measured reception performance and the spatial correlation between the beams.

4. The method of claim 3, further comprising:
configuring uplink (UL) power control information for the determined at least one beam index; and
transmitting, to the UE, the configured UL power control information,
wherein the configured UL power control information includes at least one of reference signal information for path loss measurement, target reception power information of the base station, power offset information, or path loss compensation factor information, and
wherein the reference signal information includes information indicating a second reference signal transmitted aperiodically.

5. The method of claim 3, further comprising:
receiving, from the UE, a sounding reference signal (SRS) corresponding to the one or more candidate beam indices; and
obtaining reception performance for the one or more candidate beam indices by the received SRS.

6. A method for a UE to support beamforming in a wireless communication system, the method comprising:
receiving, from a base station, information about first beam indices allocated for the UE;
receiving, from the base station, information about some beam indices among the first beam indices and information about radio resources allocated to the some beam indices; and
receiving, from the base station, a first reference signal for the UE to perform a measurement operation considering the some beam indices and the allocated radio resources,
wherein the first beam indices represent spatial correlation between beams corresponding to the first beam indices.

7. The method of claim 6, further comprising:
measuring reception performance corresponding to the some beam indices by the first reference signal;
estimating reception performance corresponding to remaining beam indices except for the some beam indices among the first beam indices, based on the measured reception performance and the spatial correlation between beams corresponding to the first beam indices;
determining one or more candidate beam indices among the second beam indices based on the measured reception performance and the estimated reception performance;
transmitting, to the base station, information indicating the one or more candidate beam indices; and
receiving, from the base station, information about at least one beam index for communication with the base station determined considering the one or more candidate beam indices.

8. The method of claim 7, further comprising:
receiving, from the base station, uplink (UL) power control information for the at least one beam index; and
controlling UL power for the at least one beam index based on the configured UL power control information,
wherein the configured UL power control information includes at least one of reference signal information for path loss measurement, target reception power information of the base station, power offset information, or path loss compensation factor information, and
wherein the reference signal information includes information indicating a second reference signal transmitted aperiodically.

9. The method of claim 6, further comprising:
obtaining at least one second beam index by an initial beam configuration;
in response to obtaining the at least one second beam index, receiving, from the base station, a UE performance identification request; and
in response to the UE performance identification request, transmitting, to the base station, performance information for determining whether to perform UE-oriented beam control based on the first beam indices,
wherein the first beam indices correspond to beams having higher beam directionality than at least one beam corresponding to the at least one second beam index.

10. The method of claim 7, further comprising transmitting, to the base station, a sounding reference signal (SRS) corresponding to the one or more candidate beam indices.

11. A base station in a wireless communication system, comprising:
a transceiver; and
at least one processor operably connected to the transceiver and including a processing circuit, wherein the at least one processor is configured to:
determine first beam indices for a UE;
control, to the UE, the transceiver to transmit information about the first beam indices;
allocate radio resources to some beam indices among the first beam indices, and control the transceiver to transmit, to the UE, information about the some beam indices and information about the radio resources allocated to the some beam indices, and control the transceiver to transmit a first reference signal for the UE to perform a measurement operation considering the some beam indices and the allocated radio resources, and
wherein the first beam indices represent spatial correlation between beams corresponding to the first beam indices.

12. The base station of claim 11, wherein the at least one processor is configured to perform the method of any one of claims 2 to 5.

13. A UE in a wireless communication system, comprising:
a transceiver; and
at least one processor operably connected to the transceiver and including a processing circuit, wherein the at least one processor:
receives, through the transceiver, information about first beam indices allocated for the UE from a base station;
receives, through the transceiver, information about some beam indices among the first beam indices and information about radio resources allocated to the some beam indices from the base station;
receives a first reference signal from the base station for the UE to perform a measurement operation considering the some beam indices and the allocated radio resources; and
measures reception performance corresponding to the some beam indices by the first reference signal, and
wherein the first beam indices represent spatial correlation between beams corresponding to the first beam indices.

14. The UE of claim 13, wherein the at least one processor is configured to perform the method of any one of claims 7 to 10.
